(19) 

Europäisches
Patentamt
European
Patent Office
Office européen
des brevets

(11) **EP 4 456 596 A1**

(12) **EUROPEAN PATENT APPLICATION**
published in accordance with Art. 153(4) EPC

(43) Date of publication:
**30.10.2024 Bulletin 2024/44**

(21) Application number: **22909985.8**

(22) Date of filing: **20.12.2022**

(51) International Patent Classification (IPC):
**H04W 24/02** *(2009.01)*

(52) Cooperative Patent Classification (CPC):
**H04W 24/02; H04W 28/16**

(86) International application number:
**PCT/CN2022/140291**

(87) International publication number:
**WO 2023/116673 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 CN 202111583336**

(71) Applicant: VIVO MOBILE COMMUNICATION CO.,
LTD.
**Dongguan, Guangdong 523863 (CN)**

(72) Inventors:
• **DING, Shengli**
  **Dongguan, Guangdong 523863 (CN)**
• **JIANG, Dajie**
  **Dongguan, Guangdong 523863 (CN)**
• **YUAN, Yannan**
  **Dongguan, Guangdong 523863 (CN)**
• **LI, Jianzhi**
  **Dongguan, Guangdong 523863 (CN)**

(74) Representative: **Conti, Marco**
  **Bugnion S.p.A.**
  **Via di Corticella, 87**
  **40128 Bologna (IT)**

(54) **SENSING METHOD AND APPARATUS AND COMMUNICATION DEVICE**

(57) This application relates to the field of communication and sensing technologies, and discloses a sensing method and apparatus and a communication device. The sensing method in embodiments of this application includes: A first device receives, based on each received beam determined by a first beam sweeping mode, an echo signal of a first signal sent by a second device. In a case that it is determined based on a first echo signal received at a first moment that a sensing object is detected, the first device obtains a first received beam used at a second moment based on the first echo signal. The first device receives, at the second moment based on the first received beam, a second echo signal of a first signal sent by the first device. The second moment is a moment after the first moment.

FIG. 2

**Description**

**CROSS-REFERENCE TO RELATED APPLICATIONS**

This application claims the priority of Chinese Patent Application No. 202111583336.1 filed in China on December 22, 2021, which is incorporated herein by reference in its entirety.

**TECHNICAL FIELD**

This application relates to the field of communication sensing technologies, and in particular, to a sensing method and apparatus and a communication device.

**BACKGROUND**

Radar detection is one of the important use cases for integrated sensing and communication. Many differences exist between the radar technology in a scenario of the integrated sensing and communication and the conventional radar technology due to differences in constraints and application goals. Currently, in the scenario of integrated sensing and communication, the solution of how to adaptively adjust beam pointing is not clear.

**SUMMARY**

Embodiments of this application provide a sensing method and apparatus and a communication device, which can resolve a problem of how to adaptively adjust beam pointing, to achieve an objective of optimizing system search and tracking efficiency.

According to a first aspect, a sensing method is provided, including:

A first device receives, based on each received beam determined by a first beam sweeping mode, an echo signal of a first signal sent by a second device.

In a case that it is determined based on a first echo signal received at a first moment that a sensing object is detected, the first device obtains a first received beam used at a second moment based on the first echo signal.

The first device receives, at the second moment based on the first received beam, a second echo signal of a first signal sent by the first device.

The second moment is a moment after the first moment.

According to a second aspect, a sensing apparatus is provided, applied to a first device, and including:

a first receiving module, configured to receive, based on each received beam determined by a first beam sweeping mode, an echo signal of a first signal sent by a second device;
a first obtaining module, configured to obtain, in a case that it is determined based on a first echo signal received at a first moment that a sensing object is detected, a first received beam used at a second moment based on the first echo signal; and
a second receiving module, configured to receive, at the second moment based on the first received beam, a second echo signal of a first signal sent by the first device.

The second moment is a moment after the first moment.

According to a third aspect, a sensing method is provided, including:

A second device sends a first signal to a first device based on each transmitted beam determined by a second beam sweeping mode.

The second device obtains a first transmitted beam used at a second moment based on a first echo signal of the first signal received by the first device at a first moment, in a case that it is determined that the first device has detected a sensing object at the first moment.

The second device sends the first signal to the first device at the second moment based on the first transmitted beam.

The second moment is a moment after the first moment.

According to a fourth aspect, a sensing apparatus is provided, applied to a second device, and including:

a first sending module, configured to send a first signal to a first device based on each transmitted beam determined by a second beam sweeping mode;
a second obtaining module, configured to obtain a first transmitted beam used at a second moment based on a first echo signal of the first signal received by the first device at the first moment, in a case that it is determined that the first device has detected a sensing object at a first moment; and

a second sending module, configured to send the first signal to the first device at the second moment based on the first transmitted beam.

The second moment is a moment after the first moment.

According to a fifth aspect, a sensing method is provided, including:

A sensing function network element sends first information to a first device, and/or

the sensing function network element sends second information to a second device.

The first information includes at least one of the following:

a first beam sweeping mode; and

a first received beam used by the first device at a second moment.

The second information includes at least one of the following:

a second beam sweeping mode; and

a first transmitted beam used by the second device at the second moment.

According to a sixth aspect, a sensing apparatus is provided, applied to a sensing function network element, and including:

a third sending module, configured to: send first information to a first device; and/or

send second information to a second device.

The first information includes at least one of the following:

a first beam sweeping mode; and

a first received beam used by the first device at a second moment.

The second information includes at least one of the following:

a second beam sweeping mode; and

a first transmitted beam used by the second device at the second moment.

According to a seventh aspect, a communication device is provided. The communication device is a first device, including a processor and a memory. The memory stores a program or an instruction executable in the processor. The program or the instruction, when executed by the processor, implements the steps of the method in the first aspect.

According to an eighth aspect, a communication device is provided. The communication device is a first device, including a processor and a communication interface. The communication interface is configured to receive, based on each received beam determined by a first beam sweeping mode, an echo signal of a first signal sent by a second device. The processor is configured to obtain, in a case that it is determined based on a first echo signal received at a first moment that a sensing object is detected, a first received beam used at a second moment based on the first echo signal. The communication interface is configured to receive, at the second moment based on the first received beam, a second echo signal of a first signal sent by the first device.

The second moment is a moment after the first moment.

According to a ninth aspect, a communication device is provided. The communication device is a second device, including a processor and a memory. The memory stores a program or an instruction executable in the processor. The program or the instruction, when executed by the processor, implements the steps of the method in the third aspect.

According to a tenth aspect, a communication device is provided. The communication device is a second device, including a processor and a communication interface. The communication interface is configured to send a first signal to a first device based on each transmitted beam determined by a second beam sweeping mode. The processor is configured to obtain a first transmitted beam used at a second moment based on a first echo signal of the first signal received by the first device at the first moment, in a case that it is determined that the first device has detected a sensing object at a first moment. The communication interface is configured to send the first signal to the first device at the second moment based on the first transmitted beam.

The second moment is a moment after the first moment.

According to an eleventh aspect, a communication device is provided. The communication device is a sensing function network element, including a processor and a memory. The memory stores a program or an instruction executable in the processor. The program or the instruction, when executed by the processor, implements the steps of the method in the fifth aspect.

According to a twelfth aspect, a communication device is provided. The communication device is a sensing function network element, including a processor and a communication interface. The communication interface is configured to send first information to a first device; and/or
send second information to a second device.

The first information includes at least one of the following:

a first beam sweeping mode; and
a first received beam used by the first device at a second moment.

The second information includes at least one of the following:

a second beam sweeping mode; and
a first transmitted beam used by the second device at the second moment.

According to a thirteenth aspect, a communication system is provided, including a first device, a second device, and a sensing function network element. The first device may be configured to perform the steps of the sensing method as described in the first aspect. The second device may be configured to perform the steps of the sensing method as described in the third aspect. The sensing function network element may be configured to perform the steps of the sensing method according to the fifth aspect.

According to a fourteenth aspect, a readable storage medium is provided. The readable storage medium stores a program or an instruction. The program or the instruction, when executed by a processor, implements the steps of the method according to the first aspect, the third aspect, or the fifth aspect.

According to a fifteenth aspect, a chip is provided. The chip includes a processor and a communication interface. The communication interface is coupled to the processor. The processor is configured to run a program or an instruction, to implement the steps of the method according to the first aspect, the third aspect, or the fifth aspect.

According to a sixteenth aspect, a computer program product is provided. The computer program product is stored in a storage medium. The computer program product is executed by at least one processor to implement the steps of the method according to the first aspect, the third aspect, or the fifth aspect.

In embodiments of this application, the echo signal of the first signal sent by the second device is received based on each received beam determined by the first beam sweeping mode. In a case that it is determined based on the first echo signal received at the first moment that the sensing object is detected, the first received beam used at the second moment is obtained based on the first echo signal. Then the second echo signal of the first signal sent by the first device is received at the second moment based on the first received beam. In this way, adaptive adjustment of the received beam can be achieved, which can optimize the system search and improve the tracking efficiency.

## BRIEF DESCRIPTION OF THE DRAWINGS

FIG. 1 shows an optional network architecture diagram applicable to this application;
FIG. 2 is a schematic flowchart I of a sensing method according to an embodiment of this application;
FIG. 3 is a schematic diagram of an arrangement of swept beams;
FIG. 4 is a schematic diagram I of a beam arrangement mode of an arrangement of swept beams;
FIG. 5 is a schematic diagram II of a beam arrangement mode of an arrangement of swept beams;
FIG. 6 is a schematic diagram of sweeping in rows and columns;
FIG. 7 is a schematic diagram of sweeping in circles;
FIG. 8 is a schematic diagram of sweeping in regions;
FIG. 9 is a schematic diagram of calculating an SNR in a one-dimensional graph;
FIG. 10 is a schematic diagram of beam sweeping with a monostatic radar in an application case I;
FIG. 11 is a schematic diagram of beam sweeping with a bistatic radar in an application case II;
FIG. 12 is a schematic diagram I of a connection relationship among a sensing function network element, a terminal, and a base station in an application case II;
FIG. 13 is a schematic diagram II of a connection relationship among a sensing function network element, a terminal, and a base station in an application case II;
FIG. 14 is a schematic diagram III of a connection relationship among a sensing function network element, a terminal, and a base station in an application case II;

FIG. 15 is a schematic diagram I of a module of a sensing apparatus according to an embodiment of this application;

FIG. 16 is a schematic structural diagram I of a first device according to an embodiment of this application;

FIG. 17 is a schematic structural diagram II of a first device according to an embodiment of this application;

FIG. 18 is a schematic flowchart II of a sensing method according to an embodiment of this application;

FIG. 19 is a schematic diagram II of a module of a sensing apparatus according to an embodiment of this application;

FIG. 20 is a schematic flowchart III of a sensing method according to an embodiment of this application;

FIG. 21 is a schematic diagram III of a module of a sensing apparatus according to an embodiment of this application;

FIG. 22 is a schematic structural diagram of a sensing function network element according to an embodiment of this application; and

FIG. 23 is a schematic structural diagram of a communication device according to an embodiment of this application.

## DETAILED DESCRIPTION

The technical solutions in embodiments of this application are clearly described below with reference to the accompanying drawings in embodiments of this application. Apparently, the described embodiments are merely some rather than all of embodiments of this application. All other embodiments obtained by a person of ordinary skill in the art based on embodiments of this application fall within the protection scope of this application.

Terms "first", "second", and the like in the specification and the claims of this application are used to distinguish between similar objects, and are not used to describe a specific order or sequence. It should be understood that the terms used in this way may be transposed where appropriate, so that embodiments of this application can be implemented in a sequence other than those illustrated or described herein. In addition, objects distinguished by "first" and "second" are generally of the same class and do not limit a quantity of objects. For example, one or more first objects may be arranged. In addition, "and/or" in the specification and the claims indicates at least one of the connected objects, and the character "/" generally indicates an "or" relationship between the associated objects.

It should be noted that, the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in embodiments of this application are usually interchangeably used, and the technology described may be used for both the systems and radio technologies mentioned above, as well as for another system and radio technology. A new radio (New Radio, NR) system is described below for an illustrative purpose, and the term NR is used in most of the following descriptions, although these technologies may be applied to applications other than applications of the NR system, such as a 6th Generation (6th Generation, 6G) communication system.

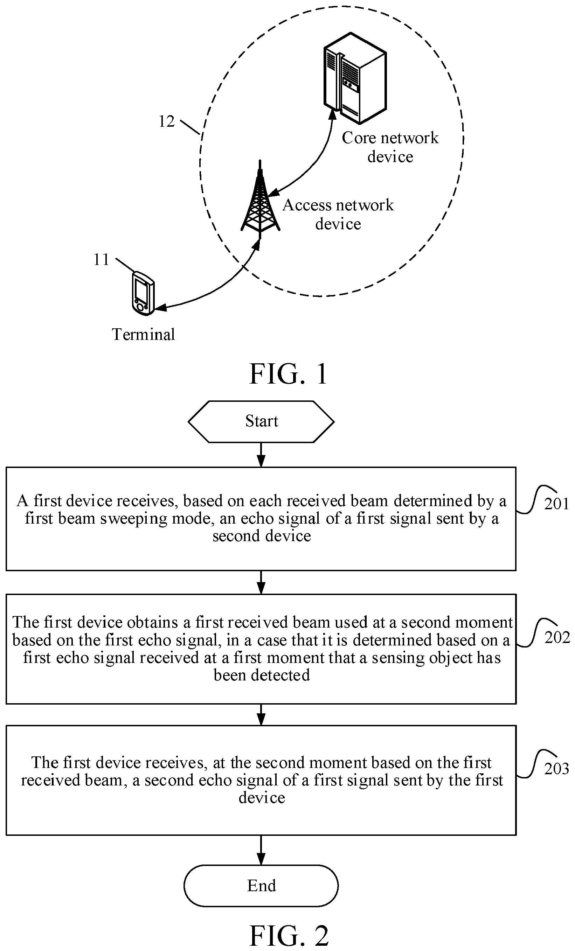

FIG. 1 is a block diagram showing a wireless communication system to which embodiments of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer) which is also referred to as a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle user equipment device (Vehicle User Equipment, VUE), a pedestrian terminal (Pedestrian User Equipment, PUE), a smart home (a home device with a wireless communication function, such as a refrigerator, a television, a washing machine, or a furniture), a game console, a personal computer (personal computer, PC), a teller machine, or a self-service machine. The wearable device includes a smartwatch, a smart wristband, a smart headset, smart glasses, smart jewelry (a smart bangle, a smart bracelet, a smart ring, a smart necklace, a smart anklet, a smart leglet, and the like), a smart wristband, smart clothing, and the like. It should be noted that, a specific type of the terminal 11 is not limited in embodiments of this application. The network side device 12 may include an access network device and a core network device. The access network device may also be referred to as a wireless access network device, a radio access network (Radio Access Network, RAN), a wireless access network function, or a wireless access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a household NodeB, a household evolved NodeB, a transmitting receiving point (Transmitting Receiving Point, TRP), or another appropriate term in the art. The base station is not limited to a specific technical term, as long as the same technical effect can be achieved. It should be noted that, in this embodiment of this application, only a base station in an NR system is used as an example for description, and a specific type of the base station is not limited. The core network device may include but is not limited to at least one of a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), or the like. It should be noted that, in this embodiment of this application, only a core network device in the NR system is used as an example for description, but a specific type of the core network device is not limited.

First, related technologies involved in this application are described as follows:

In the future, B5G and 6G wireless communication systems are expected to provide various high-precision sensing services, for example, indoor positioning of robot navigation, Wi-Fi sensing of a smart home, and radar sensing of an autonomous vehicle. A sensing system and a communication system are usually designed separately and occupy different bands. Then due to widespread deployment of millimeter waves and the massive multiple-input multiple-output (Multiple-Input Multiple-Output, MIMO) technology, a communication signal in a future wireless communication system often has high resolution in both time domain and angle domain. This makes it possible to implement high-precision sensing by using communication signals. Therefore, it is best to jointly design the sensing system and the communication system, so that the sensing system and the communication system can share a same band and hardware, to improve spectral efficiency and reduce hardware costs. This has prompted research on integrated sensing and communication (Integrated Sensing And Communication, ISAC). ISAC is to become a key technology in the future wireless communication system to support a large number of important application scenarios. For example, in a future autonomous vehicle network, an autonomous vehicle obtains a large amount of information from a network, including an ultra-high resolution map and near real-time information, so as to navigate and avoid upcoming traffic congestion. In a same situation, a radar sensor in the autonomous vehicle should be capable of providing a powerful and high-resolution obstacle detection function, and the resolution is in the order of centimeters. The ISAC technology used for autonomous vehicles provides a possibility of implementing high-data-rate communication and high-resolution obstacle detection by using same hardware and spectrum resources. Another application of the ISAC includes indoor positioning and activity recognition based on Wi-Fi, communication and sensing of an unmanned aerial vehicle, XR, integrated radar and communication, and the like. Each application has different requirements, limitations, and supervision problems. The ISAC has attracted great research interest and attention from both academia and industry. For example, an increasing quantity of academic publications on the ISAC emerge recently, which range from transceiver architecture design, ISAC waveform design, joint coding design, and time-frequency-space signal processing to experimental performance delay, prototype design, and field test.

Currently, a typical scenario of the integrated sensing and communication that is expected to be realized through technological upgrade based on the 5G communication system architecture is shown in Table 1.

Table 1 Typical scenario of integrated sensing and communication

| Wireless sensing category | Sensing function | Application scenario |
|---|---|---|
| Large-scale macro sensing | Weather, air quality, and the like | Meteorology, agriculture, and life services |
| | Traffic flow (intersection) and pedestrian flow (subway entrance) | Smart city, intelligent transportation, and commercial service |
| | Animal activity, migration, and the like | Animal husbandry, ecological environment protection, and the like |
| | Target tracking, ranging, speed measurement, contour, and the like | Numerous application scenarios of conventional radar |
| | Three-dimensional map construction | Intelligent driving, navigation, and smart city |

(continued)

| Wireless sensing category | Sensing function | Application scenario |
|---|---|---|
| Short-range refined sensing | Motion and posture recognition | Smart interaction, game, and smart home of smartphone |
| | Heartbeat, breathing, and the like | Health and healthcare |
| | Imaging, material detection, and the like | Security check, industry, and the like |

Radar, short for radio detection and ranging, means detecting a target and measuring a distance to the target by transmitting a radio wave and receiving an echo reflected from the target. With the development of radar technology, radar detection of a target not only includes measuring a distance to the target, but also includes measuring a speed, an azimuth angle, a pitch angle of the target, and extracting more information about the target from the above information, including a size, a shape, and the like of the target.

In a wireless sensing application of integrated sensing and communication, the radar technology may adopt a monostatic radar mode or a bistatic radar mode.

In the monostatic radar mode, a same antenna is used for transmission and receiving of a signal. A received signal and a transmitted signal enter different radio frequency processing links through a circulator. In this mode, detection without blind areas may be realized by using a continuous wave signal waveform. A premise is that the received signal and the transmitted signal need to be properly isolated, and an isolation of about 100 dB is usually needed to eliminate masking of the received signal caused by leakage of the transmitted signal. Because a receiver of a monostatic radar has all information of the transmitted signal, signal processing may be performed through matched filtering (pulse compression), to obtain a relatively high signal processing gain.

In the bistatic radar mode, no isolation problem of transmission and receiving of the signal exists. This significantly simplifies complexity of hardware. Because the radar signal processing is established based on known information, in a 5G NR integrated sensing and communication application, the radar signal processing may be performed by using the known information such as a synchronisation signal (a primary synchronisation signal (Primary Synchronisation Signal, PSS)/secondary synchronisation signal (Secondary Synchronisation Signal, SSS)) and a reference signal (a demodulation reference signal (Demodulation Reference Signal, DMRS)/channel state information reference signal (Channel State Information Reference Signal, CSI-RS)). However, due to periodicities of the synchronisation signal, the reference signal, and the like, a fuzzy graph of a signal waveform is no longer in the shape of a thumbtack, but in the shape of a pinboard, ambiguity in a latency and Doppler increases, and a gain of a main lobe decreases significantly compared with that in the monostatic radar mode. This reduces measurement ranges of a distance and a speed. Through appropriate parameter set design, the measurement ranges of the distance and the speed can satisfy measurement requirements of common targets such as cars and pedestrians. In addition, measurement accuracy of the bistatic radar is related to a position of a transceiver station relative to the target. A suitable pair of transceiver stations needs to be selected to improve detection performance.

A sensing method and apparatus and a communication device provided in embodiments of this application are described in detail below through some embodiments and application scenarios thereof with reference to the accompany drawings.

As shown in FIG. 2, an embodiment of this application provides a sensing method, including the following steps:
Step 201: A first device receives, based on each received beam determined by a first beam sweeping mode, an echo signal of a first signal sent by a second device.

It should be noted that, the first beam sweeping mode includes a beam sweeping range, an arrangement of swept beams, and a beam sweeping sequence.

Step 202: The first device obtains, in a case that it is determined based on a first echo signal received at a first moment that a sensing object is detected, a first received beam used at a second moment based on the first echo signal.

Step 203: The first device receives, at the second moment based on the first received beam, a second echo signal of a first signal sent by the first device.

It should be noted that, the second moment is a moment after the first moment.

It should be noted that, when it is determined based on the first echo signal received at the first moment that the sensing object is detected, the first device may directly adjust a received beam at a next moment based on an echo signal obtained at a previous moment or at a plurality of previous moments, and then receive the echo signal by using the adjusted received beam until the sensing process ends. In this way, adaptive adjustment of the received beam is realized, which can optimize system search and improve tracking efficiency.

It should be noted that, the first device is a receiving terminal (which may also be referred to as a receiving terminal device) in a sensing and communication process. Correspondingly, the first beam sweeping mode may be understood as a received beam sweeping mode. The first device may be a base station, a transmission point (TRP), a user equipment (UE, also referred to as a terminal), an access point (Access Point, AP), a reconfigurable intelligence surface (Reconfigurable Intelligence Surface, RIS), and the like. The second device is a sending terminal (which may also be referred to as a sending terminal device) in the sensing and communication process. The second device may be a base station, a TRP, a UE, an AP, an RIS, and the like. The second beam sweeping mode corresponding to the second device may be understood as a transmitted beam sweeping mode.

It should be noted that, in a case that the first device receives, based on each received beam determined by the first beam sweeping mode, the echo signal of the first signal sent by the second device, the sensing process is in a search mode. To be specific, the sending terminal sends a sensing signal, and the receiving terminal receives an echo signal of the sensing signal to search for the sensing object. After the receiving terminal finds the sensing object, the sensing process switches to a tracking mode, to track the found sensing object. In other words, the search mode described in this application is a process of discovering the sensing object by traversing an angle interval, and/or a distance interval, and/or a speed interval within a range specified by sensing priori information in sensing demands at the beginning of radar detection. Once relevant parameters of the sensing object are obtained, the search mode ends. The tracking mode is continuous detection of the sensing object based on the parameter of the sensing object or within a specific range including the parameters of the sensing object after the sensing object is discovered in the search mode and the parameters of the sensing object are obtained, and update of the parameters of the sensing object based on the detection result.

It should be further noted that, the first moment and the second moment mentioned in embodiments of this application may be understood as at least one first sensing frame and at least one second sensing frame. Because a signal is transmitted, received, and processed with a sensing frame as a unit of time, that is, a transmitted beam and a received beam within a same sensing frame remain unchanged, the beam adaptive adjustment provided in embodiments of this application is adjustment of a transmitted beam and a received beam within a next sensing frame.

First, obtaining of the first beam sweeping mode in the search mode is described in detail as follows.

I. For a beam sweeping range in the first beam sweeping mode

Optionally, an obtaining manner of the beam sweeping range includes one of the following steps:
A11: Determine the beam sweeping range based on priori information of a spatial range of the sensing object in sensing priori information and a position of the first device.

It should be noted that, the priori information of the spatial range includes one of the following:
A111: Coordinates of a boundary or a vertex of the spatial range.

Optionally, in this case, detection priorities within the spatial range satisfy that all spatial positions within the spatial range have a same detection priority.

Optionally, in this case, a default case is set for the detection priority. To be specific, the detection priorities of all of the spatial positions are the same by default. Certainly, the detection priorities of some spatial positions may alternatively be set separately based on detection demands for different spatial positions. For example, when the spatial range includes 10 positions, positions 7 and 8 have a relatively high detection demand, and positions 1 and 3 have a relatively low detection demand, positions 2, 4, 5, 6, 9, and 10 are set to have the same detection priority, the detection priorities of the positions 7 and 8 are higher than those of the positions 2, 4, 5, 6, 9, and 10, and the detection priorities of the positions 1 and 3 are lower than those of the positions 2, 4, 5, 6, 9, and 10. It should be noted that, when the detection priority of a position is not set separately, the default case is used.

A112: Center coordinates and a distribution range of a relative center of the spatial range

It should be noted herein that the distribution range of the spatial range of the relative center may be described by using a specific shape. For example, the distribution range may be circular, elliptical, spherical, or ellipsoidal.

Optionally, in this case, a default case is set for the detection priority. To be specific, a detection priority of the spatial position at the center within the spatial range is higher than a detection priority of a spatial position at an edge within the spatial range by default. Certainly, the detection priorities of some positions may alternatively be set separately based on detection demands for different spatial positions.

It should be noted that, when the detection priority of a position is not set separately, the default case is used.

A12: Receive the beam sweeping range sent by a sensing function network element.

It should be noted that, in this case, the beam sweeping range is determined by the sensing function network element. Specifically, for a manner of determining the beam sweeping range by the sensing function network element, reference may be made to A11. Details are not described herein again.

It should be noted herein that the sensing function network element described in embodiments of this application is a network node in a core network and/or a wireless access network responsible for at least one of functions such as sensing request processing, sensing resource scheduling, sensing information interaction, or sensing data processing, which may be upgraded based on an access management function (AMF) or a location management function (LMF) in an existing 5G network, or may be another existing or newly defined network node.

It should be noted that, the above beam sweeping range is actually determined by an opening angle formed by the spatial range relative to an antenna array of the first device. In other words, the beam sweeping range may also be understood as an angle sweeping range.

II. For an arrangement of swept beams in the first beam sweeping mode

Optionally, an obtaining manner of the arrangement of swept beams includes one of the following steps.

A21: Determine the arrangement of swept beams based on the beam sweeping range, and priority information and a beam width within a sweeping range.

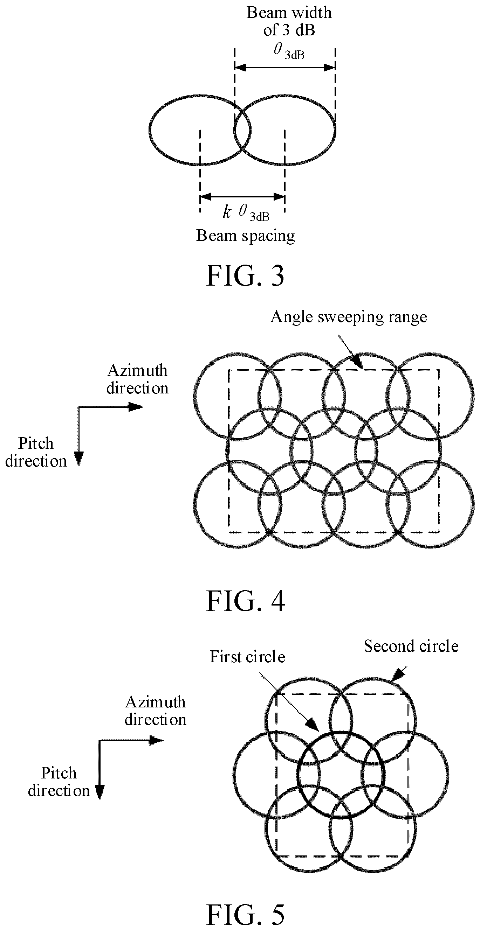

It should be noted herein that a beam overlapping mode is an overlapping mode of two adjacent sweeping beams in an angle domain, which is usually a beam spacing of 3 dB. As shown in FIG. 3, a goal of determining the beam overlapping mode is to determine a value of a proportionality coefficient k for a beam spacing and a beam width of two adjacent beams.

It should be further noted that a specific implementation of determining the arrangement of swept beams based on the beam sweeping range and the priority information and the beam width within the sweeping range includes one of the following steps.

A211: Determine a proportionality coefficient for a beam spacing and a beam width of two adjacent beams as a preset value.

In other words, in this case, a fixed beam overlapping mode is used. To be specific, a fixed or preset proportionality coefficient k is used for beam arrangement.

A212: Determine the proportionality coefficient for the beam spacing and the beam width of the two adj acent beams based on the beam sweeping range and the beam width.

It should be noted that, in this case, the beam overlapping mode is determined based on the beam sweeping range and the beam width. In other words, in this mode, the beam overlapping mode varies with the beam sweeping range and the beam width. To be specific, it is determined based on different beam sweeping ranges and beam widths that different beam overlapping modes are obtained, to cover the angle sweeping range with an optimal quantity of beams.

A213: Determine the proportionality coefficient for the beam spacing and the beam width of the two adjacent beams according to a first criterion.

The first criterion includes that spatial positions with different detection priorities within a spatial range use different proportionality coefficients.

In other words, in this case, the proportionality coefficients for different spatial positions are different. If the priori information of the spatial range is given in the above manner of A112, that is, a circular (elliptical, spherical, or ellipsoidal) range of center coordinates and a relative center of the spatial range is given, values of different proportionality coefficients k are used for a region around the center and an edge region of the spatial range, so that a region with a high detection priority at the center of the spatial range uses a smaller value of k for more intensive sweeping, and a region with a low detection priority at the edge of the spatial range uses a relatively large value of k for relatively sparse sweeping.

It should be further noted that a beam arrangement mode of the arrangement of swept beams includes at least one of the following:

B11: Arrangement in rows and columns.

It should be noted that, the beams are arranged in rows in an azimuth direction and in columns in a pitch direction, as shown in FIG. 4. Alternatively, the beams are arranged in rows in the pitch direction and in columns in the azimuth direction. In this case, two sets of values of proportionality coefficients k for beam overlapping for beams in the azimuth direction and the pitch direction need to be determined.

B12: Arrangement in circles.

It should be noted that, the beams are arranged in circles by using the spatial range of the sensing object as a center, as shown in FIG. 5. In this case, a value of the proportionality coefficient k for the beam overlapping between the circles needs to be determined.

It should be further noted herein that a beam broadening effect of the beam width with beam pointing should be considered for the beam arrangement. The angle sweeping range (in a polar coordinate system) is projected onto a sinusoidal coordinate system to perform the above beam arrangement, and then the beam arrangement in the sinusoidal coordinate system is projected back onto the polar coordinate system.

It should be particularly noted that, several fixed values of the proportionality coefficients k for the beam overlapping may be set. For example, the values of k have three options: 0.5, $\sqrt{3}/2$, and 1, which respectively correspond to fine search, normal search, and coarse search.

For a given antenna array, the beam width in the azimuth direction or the pitch direction has several fixed values based on antenna apertures in corresponding directions. For example, for an $8\times8$ antenna array, it has 8 beam width options in the azimuth direction or the pitch direction, which correspond to antenna apertures of 1 to 8 antenna array elements.

Therefore, beam arrangement of the antenna array may be completed offline within a maximum sweeping range based on the values of k and the values of the beam widths, to form a beam arrangement dataset.

The beam arrangement dataset has the following properties:

B21: Each subset of the dataset corresponds to a combination of the value of the proportionality coefficient k for beam overlapping and a quantity of antenna apertures in the azimuth direction and the pitch direction.

B22: Data content of each subset of the dataset is an azimuth angle and a pitch angle of each beam center in the beam arrangement within the maximum sweeping range.

B23: A quantity of subsets of the dataset is equal to a quantity of combinations of the value of the proportionality coefficient k and the antenna apertures in the azimuth direction and the pitch direction.

The beam arrangement dataset may be stored in the sensing function network element, the first device, or another network node accessible to the sensing function network element or the first device.

In a specific sensing application, the data in the beam arrangement dataset may be called through three sets of parameters. The three sets of parameters may be:

the angle sweeping range, including the azimuth direction and the pitch direction;

the value of the proportionality coefficient k for beam overlapping; and

the antenna apertures in the azimuth direction and the pitch direction.

A22: Receive the arrangement of swept beams sent by the sensing function network element.

It should be noted that, in this case, the arrangement of swept beams is determined by the sensing function network element. Specifically, for a manner of determining the arrangement of swept beams by the sensing function network element, reference may be made to A21. Details are not described herein again.

III. For a beam sweeping sequence in the first beam sweeping mode

Optionally, the beam sweeping sequence includes one of the following:

A31: Sweeping in rows and columns.

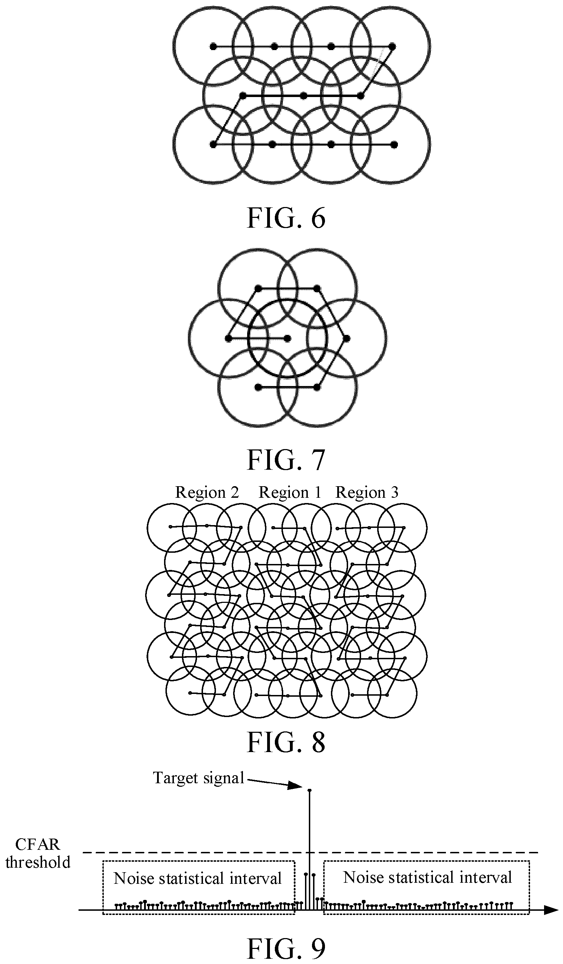

In other words, this mode is sweeping in rows in an azimuth direction and sweeping in columns in a pitch direction, as shown in FIG. 6.

A32: Sweeping in circles.

In other words, this mode is sweeping in circles from a center to an edge of a spatial range of the sensing object, as shown in FIG. 7.

A33: Sweeping in regions.

In other words, this mode is dividing the spatial range of the sensing object into several regions based on priorities to perform sweeping in regions. Each region may be swept in rows and columns, or may be swept in circles.

FIG. 8 is a schematic diagram of sweeping in rows and columns for each region.

It should be noted herein that, an implementation of obtaining a transmitted beam sweeping mode by a sending terminal is the same as that of obtaining a received beam sweeping mode by a receiving terminal. For details, reference may be made to the above description. Details are not described herein again.

It should be further noted that after the first beam sweeping mode is obtained, an echo signal of a first signal sent by a second device is received based on each received beam determined by the first beam sweeping mode. Optionally, a specific implementation of step 201 includes the following steps:

Step 2011: The first device receives, by using a second received beam indicated by the first beam sweeping mode, a third echo signal of the first signal sent by the second device.

Step 2012: The first device obtains, by using the third echo signal, a detection result of whether the sensing object is detected.

Step 2013: The first device receives, by using a third received beam indicated by the first beam sweeping mode, a fourth echo signal of the first signal sent by the second device in a case that the detection result indicates that the sensing object is not detected.

It should be noted that, the third received beam is a received beam located after the second received beam in the first beam sweeping mode.

It should be noted that, this mode refers to starting from a first received beam indicated by the first beam sweeping mode, successively receiving the echo signal of the first signal for each received beam. After the echo signal is received each time, the detection result of whether the sensing object is detected is obtained based on the echo signal. In a case that the sensing object is not detected, the echo signal of the first signal is continuously received based on a next received beam.

Optionally, a specific implementation of obtaining, based on the third echo signal, the detection result of whether the sensing object is detected includes one of the following:

C11: The first device compares obtained echo signal quality with a preset value after performing a first operation, to determine the detection result of whether the sensing object is detected.

It should be noted that, in this mode, the detection result is determined by the first device, and the first device determines the detection result based on final obtained echo signal quality. Optionally, the first operation includes one of the following:

C111: Send the third echo signal to the sensing function network element, and receive a measured quantity and the echo signal quality fed back by the sensing function network element.

In this case, the whole calculation process for obtaining the echo signal quality is completed at the sensing function network element. To be specific, the sensing function network element first performs radar signal processing on the received third echo signal to determine a measured quantity, then determines the echo signal quality based on the measured quantity, and finally sends the echo signal quality and the measured quantity to the first device.

C112: Perform radar signal processing on the third echo signal to determine the measured quantity, and determine the echo signal quality based on the measured quantity.

In this case, the whole calculation process for obtaining the echo signal quality is completed by the first device.

C113: Perform the radar signal processing on the third echo signal to determine the measured quantity, send the measured quantity to the sensing function network element, and receive the echo signal quality fed back by the sensing function network element.

In this case, the calculation process for obtaining the echo signal quality is partially performed at the sensing function network element. To be specific, the sensing function network element is only responsible for determining the echo signal quality based on the measured quantity, and then sending the echo signal quality to the first device.

C114: Obtain a first part of the measured quantity based on partial calculation of the third echo signal on which the radar signal processing is performed, send the first part to the sensing function network element, and receive a second part of the measured quantity and the echo signal quality fed back by the sensing function network element, the first part being a part at a first grade among parts with different grades included in the measured quantity, the first grade being understood as a part of the measured quantity at a lower grade that may be directly processed by the first device based on the echo signal, and the second part being a part at a second grade (that is, a part at a relatively high grade) among the parts with different grades included in the measured quantity.

In this case, the calculation process for obtaining the echo signal quality is partially performed at the sensing function network element. To be specific, the sensing function network element is only responsible for determining the second part of the measured quantity based on the first part of the received measured quantity, then determining the echo signal quality based on the first part and the second part, and finally sending the second part of the measured quantity and the echo signal quality to the first device.

C115: Obtain the first part of the measured quantity based on the partial calculation of the third echo signal on which the radar signal processing is performed, send the first part to the sensing function network element, receive the second part of the measured quantity fed back by the sensing function network element, and determine the echo signal quality based on the first part and the second part.

In this case, the calculation process for obtaining the echo signal quality is partially performed at the sensing function network element. To be specific, the sensing function network element is only responsible for determining the second part of the measured quantity based on the first part of the received measured quantity, and then sending the second part to the first device. The first device determines the echo signal quality based on the complete measured quantity.

Specifically, a specific implementation process of comparing the obtained echo signal quality with the preset value by the first device to determine the detection result of whether the sensing object is detected is:

determining that the detection result is that the sensing object is detected in a case that the echo signal quality is greater than or equal to the preset value, and determining that the detection result is that the sensing object is not detected in a case that the echo signal quality is less than the preset value.

It should be noted that, the preset value may be a pre-established value, a specified variation value, or a preset multiple of a specified variation value.

C12: The first device receives, after performing a second operation, the detection result of whether the sensing object is detected sent by a sensing function network element.

It should be noted that, in this mode, the detection result is determined by the sensing function network element, and the sensing function network element determines the detection result based on final obtained echo signal quality. Optionally, the second operation includes one of the following steps:

C121: Perform the radar signal processing on the third echo signal to determine the measured quantity, and send the measured quantity to the sensing function network element.

In this case, the calculation process for obtaining the echo signal quality is partially performed at the first device. The first device first obtains the measured quantity based on the third echo signal, and then sends the measured quantity to the sensing function network element. The sensing function network element is responsible for determining the echo signal quality based on the received measured quantity.

C122: Send the third echo signal to the sensing function network element.

In this case, the whole calculation process for obtaining the echo signal quality is completed at the sensing function network element. To be specific, the sensing function network element first performs radar signal processing on the received third echo signal to determine the measured quantity, and then determines the echo signal quality based on the measured quantity.

C123: Calculate the part of the third echo signal on which the radar signal processing to obtain the first part of the measured quantity, and send the first part to the sensing function network element.

In this case, the calculation process for obtaining the echo signal quality is partially performed at the first device. The first device first obtains the first part of the measured quantity based on the third echo signal, and then sends the first part to the sensing function network element. The sensing function network element is responsible for determining the second part of the measured quantity based on the first part of the received measured quantity, and then determining the echo signal quality based on the first part and the second part.

C124: Perform the radar signal processing on the third echo signal to determine the measured quantity, determine the echo signal quality based on the measured quantity, and send the measured quantity and the echo signal quality to the sensing function network element.

In this case, the whole calculation process for obtaining the echo signal quality is completed at the first device. To be specific, the first device first performs the radar signal processing on the received third echo signal to determine the measured quantity, then determines the echo signal quality based on the measured quantity, and finally sends the measured quantity and the echo signal quality to the sensing function network element.

Optionally, the echo signal quality includes at least one of the following:

a power of an echo signal, a signal-to-noise ratio (signal-to-noise ratio, SNR) of the echo signal, a signal-to-interference-plus-noise ratio (signal-to-interference-plus-noise ratio, SINR) of the echo signal, a reference signal received power (Reference Signal Received Power, RSRP) of the echo signal, or a reference signal received quality (Reference Signal Received Quality, RSRQ) of the echo signal.

The power of the echo signal includes at least one of the following:

C21: If the first signal is a sensing-dominated signal or an integrated sensing and communication signal, a power of a target echo signal is a total power of the target echo signal.

C22: If the first signal is a communication-dominated signal or a sensing-enhanced communication-dominated signal, for example, a 5G NR signal or a Wi-Fi signal, the power of the target echo signal is a power of a preamble (preamble) in the target echo signal, and/or a synchronization signal, and/or a reference signal. The reference signal may be a dedicated demodulation reference signal (Dedicated demodulation reference signal, DM-RS), a phase-tracking reference signal (Phase-tracking reference signal, PT-RS), a CSI reference signal (CSI Reference Signal, CSI-RS), a positioning reference signal (Positioning Reference Signal, P-RS), a channel sounding reference signal (Sounding Reference Signal, SRS), and the like.

Specifically, an obtaining manner of the power of the echo signal may be at least one of the following:

C31: Constant false alarm rate (Constant False Alarm Rate, CFAR) detection is performed on a one-dimensional latency graph obtained based on fast-time dimension FFT of the echo signal, a sample point for which the CFAR exceeds a threshold and which has a maximum amplitude is used as a target sample point, and an amplitude thereof is used as a target signal amplitude, as shown in FIG. 9.

C32: The CFAR is performed based on a Doppler one-dimensional graph obtained through slow-time dimension fast Fourier transform (Fast Fourier Transform, FFT) of the echo signal, the sample point for which the CFAR exceeds the threshold and which has the maximum amplitude is used as the target sample point, and the amplitude thereof is used as the target signal amplitude, as shown in FIG. 9.

C33: The CFAR is performed based on a two-dimensional latency-Doppler graph obtained through two-dimensional FFT (two-dimensional FFT, 2D-FFT) of the echo signal, the sample point for which the CFAR exceeds the threshold and which has the maximum amplitude is used as the target sample point, and the amplitude thereof is used as the target signal amplitude.

C34: The CFAR is performed based on a three-dimensional latency-Doppler-angle graph obtained through three-dimensional FFT (three-dimensional FFT, 3D-FFT) of the echo signal, the sample point for which the CFAR exceeds the threshold and which has the maximum amplitude is used as the target sample point, and the amplitude thereof is used as the target signal amplitude.

It should be noted that, in the method for determining the target signal amplitude, in addition to the manner of using, as the target sample point, the sample point for which the CFAR exceeds the threshold and which has the maximum amplitude, a mean value of the sample point for which the CFAR exceeds the threshold and which has the maximum amplitude and several nearest sample points of the sample point for which the CFAR exceeds the threshold is used as the target signal amplitude.

Specifically, a method for obtaining the SNR/SINR may be as follows.

C41: CFAR is performed on a one-dimensional latency graph obtained through fast-time dimension FFT of the echo signal, the sample point for which the CFAR exceeds the threshold and which has the maximum amplitude is used as the target sample point, the amplitude thereof is used as the target signal amplitude, all sample points in the one-dimensional graph that are spaced apart from the target sample point by $\pm\varepsilon$ or more sample points are used as interference/noise sample points, a mean interference/amplitude thereof is calculated as an interference/noise signal amplitude, as shown in FIG. 9, and finally the SNR/SINR is calculated based on the target signal amplitude and the interference/noise signal amplitude.

C42: The CFAR is performed on a Doppler one-dimensional graph obtained through slow-time dimension FFT of the echo signal, the sample point for which the CFAR exceeds a threshold and which has a maximum amplitude is used as the target sample point, the amplitude thereof is used as the target signal amplitude, all sample points in the one-dimensional graph that are spaced apart from the target sample point by $\pm\eta$ or more sample points are used as interference/noise sample points, a mean amplitude thereof is calculated as an interference/noise signal amplitude, and finally the SNR/SINR is calculated based on the target signal amplitude and the interference/noise signal amplitude.

C43: The CFAR is performed on a two-dimensional latency-Doppler graph obtained through 2D-FFT of the echo signal, the sample point for which the CFAR exceeds a threshold and which has a maximum amplitude is used as the target sample point, the amplitude thereof is used as the target signal amplitude, all sample points in the two-dimensional graph that are spaced apart from the target sample point by $\pm\varepsilon$ (in a fast time dimension) and $\pm\eta$ (in a slow time dimension) or more sample points are used as interference/noise sample points, a mean amplitude thereof is calculated as an interference/noise signal amplitude, and finally the SNR/SINR is calculated based on the target signal amplitude and the interference/noise signal amplitude.

C44: The CFAR is performed on a three-dimensional latency-Doppler-angle graph obtained through 3D-FFT of the echo signal, the sample point for which the CFAR exceeds a threshold and which has a maximum amplitude is used as the target sample point, the amplitude thereof is used as the target signal amplitude, all sample points in the three-dimensional graph that are spaced apart from the target sample point by $\pm\varepsilon$ (in a fast time dimension), $\pm\eta$ (in a slow time dimension), and $\pm\delta$ (in an angle dimension) or more sample points are used as interference/noise sample points, a mean amplitude thereof is calculated as an interference/noise signal amplitude, and finally the SNR/SINR is calculated based on the target signal amplitude and the interference/noise signal amplitude.

It should be noted that, in the manner for determining the target signal amplitude, in addition to the manner of using, as the target sample point, the sample point for which the CFAR exceeds the threshold and which has the maximum amplitude, a mean value of the sample point for which the CFAR exceeds the threshold and which has the maximum amplitude and several nearest sample points of the sample point for which the CFAR exceeds the threshold is used as the target signal amplitude.

It should be noted that, a manner of determining the interference/noise sample points may further be further screening based on the above determined interference/noise sample points. The screening manner is as follows: For the one-dimensional latency graph, several sample points near a sample point with a latency of 0 are removed, and the remaining interference/noise sample points are used as noise sample points. For the one-dimensional Doppler graph, several sample points near a sample point with Doppler of 0 are removed, and the remaining interference/noise sample points are used as interference/noise sample points. For the two-dimensional latency-Doppler graph, interference/noise sample points within a strip range composed of all Doppler ranges except several points near a sample point with a latency of 0 are removed, and the remaining noise sample points are used as interference/noise sample points. For the three-dimensional latency-Doppler-angle graph, several sample points near a sample point with a time dimension of 0 and interference/noise sample points within a slice-like range composed of all Doppler ranges and all angle ranges are removed, and the remaining interference/noise sample points are used as interference/noise sample points.

It should be noted that, the radar signal processing described in embodiments of this application includes at least one of the following:

C51: Matched filtering (pulse compression).

Optionally, the matched filtering includes at least one of the following steps:

C511: Segment a known transmitted signal to generate a matched filter, and perform the matched filtering on segments of a reflected echo signal of a sensing object.

C512: Perform sliding window correlation on the reflected echo signal from the sensing object by using the known transmitted signal.

C52: Perform one-dimensional fast Fourier transform FFT.

It should be noted that, if a sensing demand only requires distance information or speed information of the sensing object, only one-dimensional FFT is required, including one of the following steps:

C521: Perform one-dimensional fast-time dimension FFT to extract target distance information.

C522: Perform one-dimensional slow-time dimension FFT to extract target speed information.

C53: Perform two-dimensional FFT.

It should be noted that, if the sensing demand requires the distance information and the speed information of the sensing object, the two-dimensional FFT needs to be performed, that is, fast-time dimension FFT and slow-time dimension FFT.

C54: Perform three-dimensional FFT.

It should be noted that, if the sensing demand requires the distance information, the speed information, and angle information of the sensing object, the three-dimensional FFT needs to be performed, that is, the fast-time dimension FFT, the slow-time dimension FFT, and angle dimension FFT.

C55: Perform angle filtering.

It should be noted that, the angle filtering includes algorithms such as multiple signal classification (Multiple Signal Classification, MUSIC) and estimating signal parameter via rotational invariance techniques (Estimating signal parameter via rotational invariance techniques, ESPRIT), to improve angle sensing accuracy.

It should be noted that, when the first device and the sensing function network element only obtain a part of the measured quantity, different contents in the measured quantities have been graded. Specifically, the measured quantity and the grading of the measured quantity include one or more of the following contents:

C61: A first-grade measured quantity: It is a measured quantity that can be directly obtained by a receiver of a sensing node through processes such as antenna coupling, amplification, down-conversion, filtering, automatic gain control (Automatic Gain Control, AGC), analog to digital (analog to digital, A/D) sampling, digital down-conversion, and digital filtering, including a complex signal (including an I channel and a Q channel), a signal amplitude, a signal phase, signal power, polarization information, and the like, and a threshold detection result and a maximum/minimum value extraction result, and the like of the above measured quantity.

C62: A second-grade measured quantity: It is a measured quantity that can be obtained through a simple operation (including addition, subtraction, multiplication, division, matrix addition, subtraction, and multiplication, matrix transposition, a triangle relationship operation, a square root operation, a power operation, or the like, and the threshold detection result and the maximum/minimum value extraction result, and the like of the above operation result) performed on the first-grade measured quantity, including an amplitude ratio, a phase difference, an angle of arrival (Angle-of-Arrival, AOA) of a received signal, an angle of departure (Angle of Departure, AOD) of a transmitted signal, latency (distance) information, a distance difference, an angle difference, and the like.

C63: A third-grade measured quantity: It is a measured quantity that can be obtained through a complex operation (including FFT/inverse fast Fourier transform (Inverse Fast Fourier Transform, IFFT), discrete Fourier transform (Discrete Fourier Transform, DFT)/inverse discrete Fourier transform (Inverse Discrete Fourier Transform, IDFT), 2D-FFT, 3D-FFT, matched filtering, an autocorrelation operation, wavelet transform, digital filtering, and the like, and the threshold detection result and the maximum/minimum value extraction result, and the like of the above operation result) performed on the first-grade measured quantity and/or the second-grade measured quantity, including an operation result of a complex signal (or a signal amplitude or a signal phase) through FFT (or IFFT) or a data point thereof with a maximum value and a power spectrum or a data point thereof with a maximum value, a Doppler frequency shift (a speed), Doppler spread, a speed difference, a two-dimensional latency-Doppler graph or a data point thereof with a maximum value, a one-dimensional radar imaging graph or a data point thereof with a maximum value, a two-dimensional radar imaging graph or a data point thereof with a maximum value, a synthetic aperture radar (Synthetic Aperture Radar, SAR) imaging graph or a data point thereof with a maximum value, and the like.

It should be noted that, a grade of the above first-grade measured quantity is lower than that of the second-grade measured quantity, and the grade of the second-grade measured quantity is lower than that of the third-grade measured quantity. Optionally, the above first part may include the first-grade measured quantity, or may include the first-grade measured quantity and the second-grade measured quantity.

The grading of the measured quantities has at least one of the following features:

C71: In different sensing cases, based on different scenarios, the first-grade measured quantity, the second-grade measured quantity, and the third-grade measured quantity may all be or may not be final sensing results, and further processing is needed to obtain the final sensing result.

C72: In different sensing cases, based on different sensing target parameters and sensing methods, only the first-grade measured quantity may be required (for example, RSS-based people/traffic flow monitoring), or only the first-grade measured quantity and the second-grade measured quantity may be required (for example, radar ranging), or the first-grade measured quantity, the second-grade measured quantity, and the third-grade measured quantity may be all required (for example, radar imaging).

C73: In different sensing scenarios, based on operation capabilities of devices such as the sensing node, the sensing function network element, a core network, and an application server that perform the sensing process, and a requirement for a sensing indicator, the measured quantities at all grades may be obtained through operation in a same device, or may be obtained through operation in different devices in the sensing node, the sensing function network element, the core network, and the application server. For example:

C731: If the sensing node (such as a base station) performing the sensing process has a relatively strong operation capability, a sensing measured quantity has a relatively large data amount (a high transmission time overhead), and a sensing demand has a relatively high demand for a sensing latency, the operation of the second-grade measured quantity and/or the third-grade measured quantity may be completed by the sensing node, and an operation result may be sent to the sensing function network element, the core network, and the application server.

C732: If the sensing node (such as an Internet of Things terminal) performing the sensing process has a relatively weak operation capability, the sensing measured quantity has a relatively large data amount (a high transmission time overhead), and the sensing demand has a relatively low demand for the sensing latency but has a relatively high demand for sensing accuracy, the operation of the first-grade measured quantity is completed by the sensing node, an operation result is sent to the sensing function network element, the core network, and the application server, and the operation of the second-grade measured quantity and/or the third-grade measured quantity is performed by the sensing function network element, the core network, and the application server.

C733: If the sensing measured quantity has a relatively small data amount (a low transmission time overhead), the operation of the measured quantity at any grade may be completed by the sensing node, or the sensing function network element, or the core network, or the application server through scheduling of the core network or the application server.

Optionally, after the detection result is determined, and after the detection result that the sensing object is detected is obtained based on the echo signal quality, the first device further needs to obtain a target parameter of the sensing object relative to each of the first device and a second device. Specifically, the first device may obtain the target parameter of the sensing object relative to each of the first device and the second device in one of the following manners:

D11: The first device extracts the target parameter of the sensing object relative to each of the first device and the second device based on the measured quantity and the echo signal quality.

It should be noted that, in this manner, the first device extracts the target parameter of the sensing object relative to each of the first device and the second device based on the obtained measured quantity.

D12: The first device receives the target parameter of the sensing object relative to each of the first device and the second device.

It should be noted that, in this manner, the sensing function network element extracts the target parameter of the sensing object relative to each of the first device and the second device based on the obtained measured quantity, and then sends the target parameter of the sensing object relative to each of the first device and the second device to the first device.

It should be further noted that the target parameter includes at least one of the following: angle, distance, and speed.

Optionally, after the detection result is determined, in a case that the detection result that the sensing object is detected is obtained based on the echo signal quality, the first device may perform subsequent processing in one of the following manners:

E11: Receiving a fourth echo signal of a first signal sent by the second device is stopped by using a third received beam indicated by a first beam sweeping mode in a case that the detection result indicates that the sensing object is detected.

It should be noted that, in this case, when the sensing object is detected based on a received beam, the first device stops an echo signal receiving mode in a sweeping mode. To be specific, the first device no longer receives the echo signal for a next received beam indicated by the first beam sweeping mode, but switches to a tracking mode to track the sensing obj ect.

It should be further noted that, when the first device has detected the sensing object within a sensing frame and loses the sensing object during tracking, it indicates that subsequent tracking of the sensing object cannot be performed. In this case, the sensing object should be swept again. The first device should continue the sweeping starting from a next received beam after the received beam for which the sweeping is stopped, until detection is completed as to all beams in a beam arrangement with a maximum quantity of sweepings.

E12: In a case that the detection result indicates that the sensing object is detected, the target parameter of the sensing object detected based on the second received beam relative to each of the first device and the second device is recorded, and the first device receives, by using the third received beam indicated by the first beam sweeping mode, the fourth echo signal of the first signal sent by the second device.

It should be noted that, in this case, when the sensing object is detected based on a received beam, the sensing object may also exist in another position. In this case, the first device does not immediately enter the tracking mode, but continuously performs the process of beam sweeping in the search mode, until detection is completed as to a received beam corresponding to the maximum quantity of sweepings is completed (that is, until beam sweeping of all beams is completed).

It should be noted herein that a beam sweeping means that a sending terminal has sent the first signal for all transmitted beams, and a receiving terminal has received the echo signal for all received beams. It should be further noted herein that the sending terminal has sent the first signal based on each transmitted beam, and the receiving terminal needs to receive the echo signal based on all of the received beams before the sending terminal moves to a next transmitted beam to send the first signal again.

It should be further noted that during continuous performing of the beam sweeping in the search mode, the first device further needs to receive a fifth echo signal of the first signal at a recorded angle of the sensing object relative to the first device based on a preset time interval, and update the recorded target parameter of the sensing object relative to each of the first device and the second device based on the fifth echo signal.

Optionally, the preset time interval is determined by at least one of the following steps:

E121: Search a lookup table based on a radar cross section (Radar Cross section, RCS) and motion characteristics of the sensing object, the motion characteristics including at least one of a motion speed or a motion acceleration.
E122: Calculate a preset time interval at a second distance based on a first distance and a reference time interval between the first device and the sensing object.

Optionally, the first device further needs to send the target parameter of the sensing object relative to each of the first device and the second device to the second device or the sensing function network element after obtaining the target parameter of the sensing object relative to each of the first device and the second device.

Optionally, after the sweeping mode switches to the tracking mode, the receiving terminal needs to determine a received beam corresponding to a following moment based on an echo signal received at a previous moment. Specifically, the obtaining a first received beam used at a second moment based on the first echo signal may include one of the following manners:

E21: Determine the first received beam used at the second moment based on the first echo signal and an angle of the sensing object relative to the first device at the first moment.

In other words, in this case, it is considered that the received beam corresponding to the next moment is the same as the received beam corresponding to the previous moment.

E22: Determine the first received beam used at the second moment based on a predicted value of an angle of the sensing object relative to the first device obtained at the second moment based on the first echo signal.

It should be noted that, in this manner, the received beam corresponding to the next moment is predicted by using a specific algorithm, and the echo signal is continuously received by using a prediction result.

It should be noted herein that the prediction manner is content implemented by a device, and is not limited in this application.

E23: Receive the first received beam used at the second moment sent by the sensing function network element.

It should be noted that, in this case, the sensing function network element determines the first received beam used at the second moment, and notifies the first device of a determination result. Specifically, the sensing function network element may determine the first received beam used at the second moment in the above manner of E21 or E22.

It should be noted herein that, whether the angle of the sensing object relative to the first device at the first moment or the predicted value of the angle of the sensing object relative to the first device at the second moment is first determined based on the echo signal, the detection result of whether the sensing object is detected needs to be obtained first based on the echo signal at the previous moment, and the angle of the sensing object relative to each of the first device and the second device is extracted based on the measured quantity and echo signal quality obtained during obtaining of the detection result. The received beam corresponding to the next moment is determined based on the extracted angle only in a case that the sensing object is detected. It should be noted that, for a specific implementation of the process of obtaining the detection result of whether the sensing object is detected and extracting the angle, reference may be made to the above description. Details are not described herein again. It should be further noted that the angle of the sensing object relative to the first device at the next moment may be determined based on an angle of the sensing object relative to the first device at the previous moment and through prediction on the angle of the sensing object relative to the first device at the next moment based on the previous angle of the sensing object relative to the first device. A specific prediction manner is not limited in this application.

It should be noted that, the transmitted beam of the second device is determined in the same manner as the received beam of the first device.

Embodiments of this application are described in detail in specific applications as follows.

Application case I: Adaptation of antenna aperture based on a monostatic radar mode

First, it should be noted that, a monostatic radar is composed of a signal transmitter and receiver and a common antenna, and has advantages that a target echo signal is naturally coherent with a local oscillator of the receiver, and signal processing is convenient. A disadvantage of the monostatic radar is that signal transmission and receiving cannot be performed simultaneously, and only a signal waveform with a specific duty cycle may be used. In this way, a blind area for detection is caused, and a complex algorithm needs to be used for compensation. Alternatively, signal transmission and receiving are performed simultaneously, and strict isolation is performed between transmission and receiving. However, it is difficult to implement for a high-power military radar.

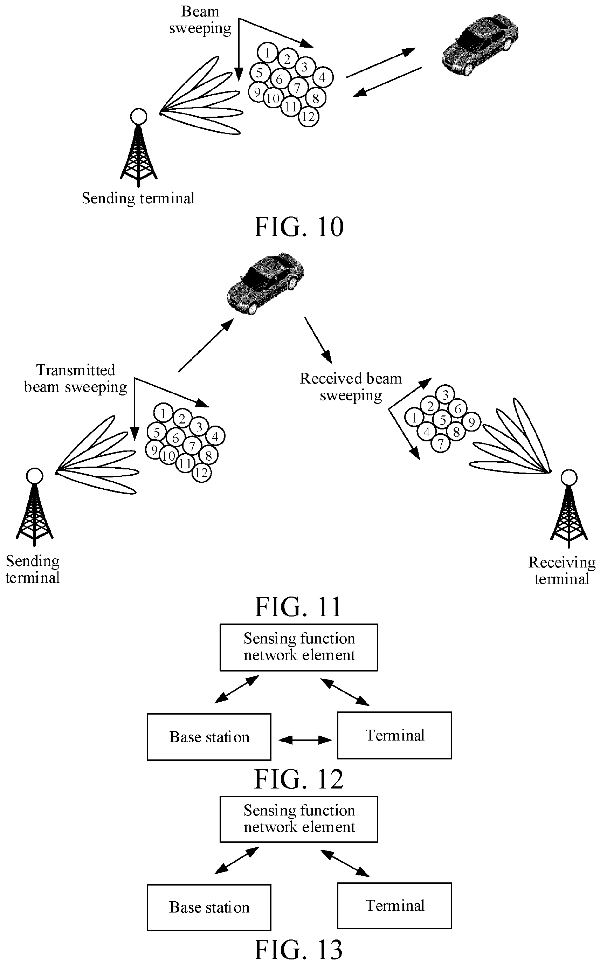

A schematic diagram of beam sweeping of the monostatic radar is shown in FIG. 10.

An example in which a base station A performs self-transmission and self-receiving of a sensing signal is used. In this case, a main implementation process includes the following steps:

Step S11: At an initial moment of sensing, the base station A or a sensing function network element sets a sensing signal configuration parameter based on a sensing target parameter (that is, a sensing object parameter), a sensing indicator requirement, sensing priori information in sensing demands in combination with capability information of the base station A.

The capability information includes hardware configuration, software configuration, occupation of software and hardware resources of a current service, and service types and service priority information of the currently occupied software and hardware resources.

The sensing target parameter includes at least one of the following:

distance/latency;
speed/Doppler; and
angle.

The sensing indicator includes at least one of the following:

a ranging/angle measurement/speed measurement resolution;
a ranging/angle measurement/speed measurement accuracy;
a ranging/angle measurement/speed measurement range;
a requirement for an RCS of a sensing object;
maneuvering characteristics (an acceleration) of the sensing object;
a sensing data rate (an update rate of a sensing target parameter per unit time, unit: Hz); and
a detection probability/false alarm probability.

The sensing priori information is priori information of a spatial range and/or motion characteristics of the sensing target or a sensing region provided to the base station A, including at least one of the following:

priori information of the spatial range: a position range, an angle range, and/or the like of a to-be-sensed target or region; and
priori information of the motion characteristics: a speed range, an acceleration range, and/or the like of the to-be-sensed target.

The sensing signal configuration parameter includes at least one of the following:

a signal frequency or an operating bandwidth, and if the first signal is an orthogonal frequency division multiplex (Orthogonal frequency division multiplex, OFDM) signal, further includes a subcarrier spacing of the OFDM signal, a quantity of resource elements (Resource Elements, REs) spaced by a sensing signal in a frequency domain, and a quantity of OFDM symbols spaced by the sensing signal in a time domain;
a width of a transmitted/received beam;
a duration of a sensing frame (that is, a sensing burst duration): it refers to a time required for a radar to complete a sensing process and obtain a required target characteristic parameter (distance, and/or angle, and/or speed) based on a sensing indicator requirement in a sensing demand, one sensing burst duration including several pulse signal periods, or several frequency modulated continuous wave (Frequency Modulated Continuous Wave, FMCW) signal periods, or several OFDM symbol durations;
a duty cycle and a pulse period of a pulse signal; and
a transmission power.

The process of setting the sensing signal configuration parameter based on the sensing indicator requirement includes at least one of the following:

setting the operating bandwidth based on a requirement for the ranging resolution;
setting the width of the transmitted beam and the width of the received beam based on a requirement for the angle measurement resolution;
setting the sensing burst duration based on a requirement for the speed measurement resolution;
setting the quantity of OFDM symbols spaced by the OFDM signal in the time domain, or the duty cycle and the pulse period of the pulse signal based on a requirement for the ranging range;
setting a transmission power and a gain of the transmitted/received beam based on the ranging range, a target RCS, and a requirement for ranging/angle measurement/speed measurement accuracy; and
setting the subcarrier spacing of the OFDM signal, the quantity of REs spaced in the frequency domain, or the pulse period of the pulse signal based on the requirement for the speed measurement range.

It should be noted that, this application mainly involves link adaptation of beam pointing, and therefore the sensing signal configuration parameter only includes parameters related to link adaptation of the antenna aperture.

Step S12: The sensing function network element or the base station A determines a beam sweeping mode based on the sensing priori information, a position information of the base station A, and the beam width determined in step S11.

Specifically, the beam sweeping mode includes a beam sweeping range, an arrangement of swept beams, and a beam sweeping sequence.

It should be noted that, for a specific determination manner of the beam sweeping mode, reference may be made to the above description. Details are not described herein again.

Step S13: The base station A dwells on each beam based on the beam sweeping mode for one or several sensing burst durations; the base station A, during each sensing burst duration, generates and sends a first signal based on the sensing signal configuration parameter, and receives a radar reflection echo of the first signal to obtain an echo signal; and the base station A further needs to receive the sensing signal configuration parameter and the beam sweeping mode sent by the sensing function network element before the base station A generates the first signal if the sensing signal configuration parameter and/or the beam sweeping mode is set by the sensing function network element.

The first signal may include:

a communication-dominated signal, such as an NR signal, an LTE signal, and a Wi-Fi signal;
a sensing-dominated signal, such as a radar signal, including an FMCW radar signal, an OFDM radar signal (including a phase-coded OFDM radar signal), an LFM signal, a simple pulse train signal, a phase-coded radar signal, and the like;
a sensing-enhanced communication-dominated signal, for example, an NR signal with a time-frequency domain density of a reference signal redesigned for a sensing function; and
an integrated sensing and communication signal: it refers to a new signal waveform specially designed for a scenario of integrated sensing and communication, which may include a signal waveform designed for applicability of a reference signal based on an NR signal, a multi-symbol OFDM pulse signal waveform, and the like.

A waveform of the first signal may be a continuous wave waveform or a pulse waveform.

Step S14: The base station A may obtain a measured quantity based on the echo signal after obtaining the echo signal.

Specifically, for an obtaining manner of the measured quantity, reference may be made to the above description. Details are not described herein again.

Step S15: The base station A or the sensing function network element obtains echo signal quality based on the measured quantity of the echo signal.

Step S16: The base station A or the sensing function network element determines, based on the echo signal quality of the echo signal, whether a sensing object is found, determines that the sensing object is found if the echo signal quality is greater than or equal to a preset value, otherwise determines that the sensing object is not found.

If the sensing object is not found, dwelling on a next beam is performed, and the operations of step S13 to step S15 are repeated. Searching of all beams in a set beam arrangement with the maximum quantity of sweepings is completed based on the maximum quantity of sweepings in a sensing constraint in the sensing demand. If the sensing object is still not found after the searching with the maximum quantity of sweepings is completed, information indicating that the sensing object is not found is reported.

If the sensing object is found, one of the following two processing manners may be used:

F1: Stop sweeping and switch to tracking, that is, switch to tracking of a currently found sensing object, and determine a beam at a next moment by using an angle of a sensing object relative to the base station A measured at a current moment; and determine the beam at the next moment by using a predicted angle of the sensing object at the next moment relative to the base station A after the sensing object is tracked for a few sensing frames. Specifically, the process is described in step S17.

It should be further noted that if stable target tracking cannot be established, that is, if the sensing object is lost after tracking for a few sensing frames, sweeping is continued starting from a next beam after a beam for which the sweeping is stopped, until the search for all beams in a beam arrangement with the maximum quantity of sweepings is completed.

F2: Continue sweeping, record target parameters (angle, distance, speed, and the like) of the currently found sensing object relative to the base station A, then continuously perform dwelling on the next beam based on the beam arrangement in the beam sweeping mode, and repeat the operations of step S13 to step S15, until the search for all of the beams in the beam arrangement with the maximum quantity of sweepings is completed and all of the target parameters (the angle, the distance, the speed, and the like) of all found sensing objects relative to the base station A are recorded. Then a second round of sweeping is performed on the beams of all of the found sensing objects, a beam at a next moment is determined by using an angle of the sensing object relative to the base station A measured at the current moment, and the beam at the next moment is determined by using a predicted angle of the sensing object at the next moment relative to the base station A after the sensing object is tracked for a few sensing frames. Specifically, the process is described in step S17.

It should be noted that, during continuous sweeping, for each found sensing object, the sensing object dwells on a beam at a preset time interval based on the recorded latest parameter of the sensing object relative to the base station A, until the sweeping ends.

It should be noted that, for the preset time interval, reference may be made to the above description. Details are not described herein again.

It should be further noted that for a sensing object for which stable tracking cannot be established (that is, after entering the tracking mode, the base station A tracks the sensing object for a period of time and suddenly cannot find the sensing object, and this case is referred to as that no stable tracking is established), the sensing object is deleted.

Step S17: For the sensing object entering the tracking mode, determine the beam of the sensing object at the next moment by using the predicted angle of the sensing object at the next moment relative to the base station A, no longer perform beam sweeping based on the position of the beam arrangement in the above beam sweeping mode, and if a plurality of sensing objects exist, track the sensing objects in a time-sharing manner.

For the first signal, radar signal processing, the measured quantity, a power of the echo signal, and the SNR/SINR of the echo signal in the tracking process, reference may be made to the above description. Details are not described herein again.

It should be noted herein that, the prediction manner is implemented by a device, and is not limited in this application.

Step S18: The base station A continuously performs the beam adaptation process of tracking the sensing object in step S17 until the sensing process ends.

A determination manner of the end of the sensing process includes at least one of the following steps:

H1: Sensing timing ends.

In other words, when a sensing time length satisfies a sensing duration requirement in the sensing demand, the sensing process ends.

H2: A sensing indicator reaches the standard.

In other words, when a specific sensing indicator in the sensing demand satisfies the requirement, the sensing process ends. For example, in a radar imaging scenario, a radar imaging operation performed on an imaging range specified in the sensing demand is completed by using an imaging resolution requirement in the sensing demand.

H3: The beam fails.

In other words, since the sensing object is obstructed or a target motion is in a sensing range of the sensing demand, and a sensing echo signal power or a sensing echo signal SNR cannot satisfy relevant requirements of the sensing demand, the sensing process ends.

H4: The sensing object is lost.

In other words, due to motion characteristics (for example, frequent acceleration and deceleration, or frequent turning) of the sensing object, and the like, a radar cannot establish stable tracking of the sensing object, the radar loses tracking of the sensing object, and therefore the sensing process ends.

Application case II: Adaptation of antenna aperture based on a bistatic radar mode

First, it should be noted that, a bistatic radar means that a signal transmitter and a signal receiver are located in different positions. An advantage is that signal transmission and receiving can be performed simultaneously, and a continuous wave waveform may be used for detection. A disadvantage is that it is difficult to achieve co-frequency and coherence between the receiver and the transmitter, and signal processing is relatively complex.

A schematic diagram of beam sweeping of the bistatic radar is shown in FIG. 11.

An example in which a sending terminal device is used as a base station (that is, the base station sends a sensing signal) and a receiving terminal is set as a terminal (that is, the terminal receives the sensing signal) is used. In this case, a main implementation process includes the following steps:

Step S21: At an initial moment of sensing, set a sensing signal configuration parameter based on a sensing target parameter, a sensing indicator requirement, and sensing priori information in a sensing demand in combination with capability information of the base station and the terminal, including the following options:

A sensing function network element sets the sensing signal configuration parameter based on the sensing target parameter, the sensing indicator requirement, and the sensing priori information in the sensing demand in combination with the obtained capability information of the base station and the terminal, and sends the sensing signal configuration parameter to the base station and the terminal.

The base station and the terminal set relevant parts of the sensing signal configuration parameter based on the sensing target parameter, the sensing indicator requirement, and the sensing priori information in the sensing demand in combination with the respective capability information.

One of the base station and the terminal sets the sensing signal configuration parameter based on the sensing target parameter, the sensing indicator requirement, and the sensing priori information in the sensing demand in combination with the capability information thereof and the obtained capability information of an other device, and sends the sensing signal configuration parameter to the other device.

Connection relationships and corresponding information interaction methods among the sensing function network element, the base station, and the terminal include the following three situations:

Direct communicative connection exists between any two of the sensing function network element, the base station, and the terminal, as shown in FIG. 12. In this case, any two of the sensing function network element, the base station, and the terminal may directly perform information interaction.

The direct communicative connection exists between the sensing function network element and both the base station and the terminal, but no direct communicative connection exists between the base station and the terminal, as shown in FIG. 13. In this case, the sensing function network element may directly perform information interaction with the base station or the terminal, and the information interaction between the base station and the terminal needs to be forwarded through the sensing function network element.

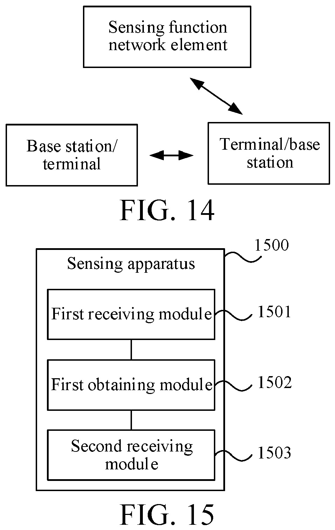

The direct communicative connection exists between the sensing function network element and either the base station or the terminal, and the direct communicative connection exists between the base station and the terminal, as shown in FIG. 14. In this case, a device that is in direct communicative connection with the sensing function network element may directly perform information interaction with the sensing function network element, and interaction between a device that is not in direct communicative connection with the sensing function network element and the sensing function network element needs be forwarded through the device in the direct communicative connection with the sensing function network element.

Before the base station or the terminal sets the sensing signal configuration parameter related to the other device, the base station or the terminal needs to perform information interaction with the other device to obtain capability information of the other device.

The sensing function network element obtains the capability information of the base station and the terminal in the following two manners.

The sensing function network element or another network node accessible by the sensing function network element pre-stores the capability information of the base station and the terminal.

The sensing function network element performs information interaction with the base station and the terminal, and the base station and the terminal report capability information thereof to the sensing function network element.

The capability information of the base station and the terminal includes hardware configuration and software configuration of the base station and the terminal, occupation of current software and hardware resources, and service types and service priority information of the currently occupied software and hardware resources of the base station and the terminal.

For the sensing target parameter, the sensing indicator, the sensing priori information, and the sensing signal configuration parameter, reference may be made to the application case I. Details are not described herein again.

Step S22: The sensing function network element determines a transmitted beam sweeping mode and a received beam sweeping mode based on the sensing priori information, position information of the base station, position information of the terminal, a width of a transmitted beam of the base station, and a width of a received beam of the terminal;

or

the base station determines the transmitted beam sweeping mode based on the sensing priori information, the position information of the base station, and the width of the transmitted beam of the base station, and the terminal determines the received beam sweeping mode based on the sensing priori information, the position information of the terminal, and the width of the received beam of the terminal.

For the transmitted beam sweeping mode and the received beam sweeping mode, reference may be made to the above description. Details are not described herein again.

Step S23: The base station dwells on each transmitted beam based on the transmitted beam sweeping mode, and the terminal dwells on each received beam for one or more sensing burst durations based on the received beam sweeping mode.

During each sensing burst duration, the base station generates and sends a first signal based on the sensing signal configuration parameter, and the terminal receives a radar reflection echo of the first signal to obtain an echo signal.

For details of the first signal, reference may be made to the application case I. Details are not described herein again.

Step S24: The terminal may obtain a measured quantity based on the echo signal after obtaining the echo signal.

Specifically, for an obtaining manner of the measured quantity, reference may be made to the above description. Details are not described herein again.

Step S25: The terminal or the sensing function network element obtains echo signal quality based on the measured quantity of the echo signal.

Step S26: The terminal or the sensing function network element determines, based on the echo signal quality, whether a sensing object is found, determines that the sensing object is found if the echo signal quality is greater than or equal to a preset value, otherwise determines that the sensing object is not found.

If the sensing object is not found, the terminal dwells on a next received beam and the operations of step S13 and step S14 are repeated until the terminal completes beam sweeping of all beams in the received beam arrangement. Then the first device dwells on a next transmitted beam, and the terminal repeats sweeping of the received beam, until the terminal completes sweeping of the received beam based on all transmitted beams of the base station.

If the sensing object is found, one of the following two processing manners may be used:

K1: Stop sweeping, and start tracking a current sensing object, where the terminal sends target parameters (angle, distance, speed, and the like) of the current sensing object relative to each of the base station and the terminal to the base station, or the sensing function network element sends the target parameters of the current sensing object relative to the base station and the terminal to the base station and the terminal.

The base station determines a transmitted beam at a next moment by using an angle of the sensing object relative to the base station at a current moment, and determines the transmitted beam at the next moment by using a predicted angle of the sensing object relative to the base station at the next moment until stable tracking is established. The process is described in step S27.

The terminal determines a transmitted beam at the next moment by using the angle of the sensing object relative to the terminal at the current moment, and determines the transmitted beam at the next moment by using a predicted angle of the sensing object relative to the terminal at the next moment until the stable tracking is established. The process is described in step S27.

If the stable tracking cannot be established, sweeping is continued starting from a next beam after the beam for which the sweeping is stopped.

K2: Continue sweeping and record the target parameters of the currently found sensing object relative to each of the base station and the terminal, where the terminal continues to dwell on a next received beam based on the received beam arrangement, and repeats the operations of step S23 and step S24, until the terminal completes sweeping all received beams and records target parameters (the angle, the distance, the speed, and the like) of all of the found sensing objects relative to each of the base station and the terminal.

Then the base station dwells on the transmitted beam until the next transmitted beam based on a beam sweeping sequence of the transmitted beam sweeping mode, and the terminal sweeps the received beam based on the beam sweeping sequence of the received beam sweeping mode, and repeats the operations of step S23 and step S24, and so on, until sweeping of the received beams of the terminal is completed on all of the transmitted beams of the base station.

The terminal sends the target parameters of all of the found sensing objects respectively relative to the base station and the terminal to the base station, or the sensing function network element sends the target parameters of all of the found sensing objects relative to each of the base station and the terminal to the base station and the terminal.

Then a second round of sweeping is performed.

The base station determines a transmitted beam at a next moment by using an angle of the sensing object relative to the base station A at the current moment, and determines the transmitted beam at the next moment by using a predicted angle of the sensing object at the next moment relative to the base station after tracking the sensing object for a few sensing frames. The process is described in step S27.

The terminal determines a transmitted beam at the next moment by using an angle of the sensing object relative to the terminal at the current moment, and determines the transmitted beam at the next moment by using the predicted angle of the sensing object at the next moment relative to the terminal after tracking the sensing object for a few sensing frames. The process is described in step S27.

During continuous sweeping, for each found sensing object, the sensing object dwells on a beam at a preset time interval based on the recorded latest parameter of the sensing object relative to the base station A and the terminal, until the sweeping ends.

It should be noted that, for the preset time interval, reference may be made to the above description. Details are not described herein again.

It should be further noted that for a sensing object for which stable tracking cannot be established, the sensing object is deleted.

Step S27: For each sensing object entering the tracking mode, at each moment, the terminal or the sensing function network element predicts the target parameter of the sensing object relative to each of the base station and the terminal at the next moment; then the terminal sends the target parameter of the sensing object relative to each of the base station and the terminal to the base station, or the sensing function network element sends the target parameter of the sensing object relative to each of the base station and the terminal to the base station and the terminal, and if a plurality of sensing objects exist, the sensing objects are tracked in a time-sharing manner.

Then the base station determines the transmitted beam at the next moment by using the predicted angle of the sensing object relative to the base station at the next moment, and the terminal determines the received beam at the next moment by using the predicted angle of the sensing object relative to the terminal at the next moment.

For the first signal, radar signal processing, the measured quantity, a power of the echo signal, and the SNR/SINR of the echo signal in the tracking process, reference may be made to the above description. Details are not described herein again.

It should be noted herein that, the prediction manner is content implemented by a device, and is not limited in this application.

Step S28: The base station and the terminal continuously perform the beam adaptation process of tracking the sensing object in step S17 until the sensing process ends.

Specifically, for a manner of determining the end of the sensing process, reference may be made to the application case I. Details are not described herein again.

It should be noted that, this application provides a link adaptive adjustment mode of radar signal beam pointing in a scenario of integrated sensing and communication. In a search mode, adaptive beam sweeping is performed based on a sensing demand. In a tracking mode, beam pointing at the next moment is adaptively adjusted based on an angle of a target, to optimize searching and tracking efficiency for the target.

The sensing method provided in embodiments of this application may be performed by a sensing apparatus. In embodiments of this application, the sensing apparatus provided in embodiments of this application is described by using an example in which the sensing apparatus performs the sensing method.

As shown in FIG. 15, an embodiment of this application provides a sensing apparatus 1500, applied to a first device, and including:

a first receiving module 1501, configured to receive, based on each received beam determined by a first beam sweeping mode, an echo signal of a first signal sent by a second device;

a first obtaining module 1502, configured to obtain, in a case that it is determined based on a first echo signal received at a first moment that a sensing object is detected, a first received beam used at a second moment based on the first echo signal; and

a second receiving module 1503, configured to receive, at the second moment based on the first received beam, a second echo signal of a first signal sent by the first device.

The second moment is a moment after the first moment.

Optionally, the first beam sweeping mode includes at least one of the following:
a beam sweeping range, an arrangement of swept beams, and a beam sweeping sequence.

Optionally, an obtaining manner of the beam sweeping range includes one of the following:

determining, by the first device, the beam sweeping range based on priori information of a spatial range of the sensing object in sensing priori information and a position of the first device; and
receiving, by the first device, the beam sweeping range sent by a sensing function network element.

Optionally, the priori information of the spatial range includes one of the following:

coordinates of a boundary or a vertex of the spatial range; and
center coordinates and a distribution range of a relative center of the spatial range.

Optionally, in a case that the priori information of the spatial range includes the coordinates of the boundary or the vertex of the spatial range, all spatial positions within the spatial range have a same detection priority.

Optionally, in a case that the priori information of the spatial range includes the center coordinates and the distribution range of the relative center of the spatial range, a detection priority of a spatial position at the center within the spatial range is higher than a detection priority of a spatial position at an edge within the spatial range.

Optionally, an obtaining manner of the arrangement of swept beams includes one of the following:

determining, by the first device, the arrangement of swept beams based on the beam sweeping range, and priority information and a beam width within a sweeping range; and
receiving, by the first device, the arrangement of swept beams sent by a sensing function network element.

Optionally, the manner of determining the arrangement of swept beams based on the beam sweeping range, and priority information and a beam width within a sweeping range includes one of the following:

determining a proportionality coefficient for a beam spacing and a beam width of two adjacent beams as a preset value;
determining the proportionality coefficient for the beam spacing and the beam width of the two adjacent beams based on the beam sweeping range and the beam width; and
determining the proportionality coefficient for the beam spacing and the beam width of the two adjacent beams according to a first criterion.

The first criterion includes that spatial positions with different detection priorities within a spatial range use different proportionality coefficients.

Optionally, a beam arrangement mode of the arrangement of swept beams includes at least one of the following:

an arrangement in rows and columns; and
an arrangement in circles.

Optionally, the beam sweeping sequence includes one of the following:

sweeping in rows and columns;
sweeping in circles; and
sweeping in regions.

Optionally, the sweeping in regions satisfies at least one of the following:

sweeping each region in rows and columns; and
sweeping each region in circles.

Optionally, the first receiving module 1501 includes:

a first receiving unit, configured to receive, by using a second received beam indicated by the first beam sweeping mode, a third echo signal of the first signal sent by the second device;
a first obtaining unit, configured to obtain, based on the third echo signal, a detection result of whether the sensing object is detected; and

a first execution unit, configured to receive, by using the third received beam indicated by the first beam sweeping mode, a fourth echo signal of the first signal sent by the second device in a case that the detection result indicates that the sensing object is not detected.

The third received beam is a received beam located after the second received beam in the first beam sweeping mode.

Optionally, the first obtaining unit is configured to implement one of the following steps:

comparing obtained echo signal quality with a preset value after performing a first operation, to determine the detection result of whether the sensing object is detected; and
receiving, after performing a second operation, the detection result of whether the sensing object is detected sent by a sensing function network element.

The first operation includes one of the following:

sending the third echo signal to the sensing function network element, and receiving a measured quantity and the echo signal quality fed back by the sensing function network element;
performing radar signal processing on the third echo signal to determine the measured quantity, and determining the echo signal quality based on the measured quantity;
performing radar signal processing on the third echo signal to determine the measured quantity, sending the measured quantity to the sensing function network element, and receiving the echo signal quality fed back by the sensing function network element;
obtaining a first part of the measured quantity based on partial calculation of the third echo signal on which the radar signal processing is performed, sending the first part to the sensing function network element, and receiving a second part of the measured quantity and the echo signal quality fed back by the sensing function network element, the first part being a part at a relatively low grade among parts with different grades included in the measured quantity, and the second part being a part at a relatively high grade among the parts with different grades included in the measured quantity; and
obtaining the first part of the measured quantity based on the partial calculation of the third echo signal on which the radar signal processing is performed, sending the first part to the sensing function network element, receiving the second part of the measured quantity fed back by the sensing function network element, and determining the echo signal quality based on the first part and the second part.

The second operation includes one of the following:

performing the radar signal processing on the third echo signal to determine the measured quantity, and sending the measured quantity to the sensing function network element;
sending the third echo signal to the sensing function network element;
obtaining the first part of the measured quantity based on the partial calculation of the third echo signal on which the radar signal processing is performed, and sending the first part to the sensing function network element; and
performing the radar signal processing on the third echo signal to determine the measured quantity, determining the echo signal quality based on the measured quantity, and sending the measured quantity and the echo signal quality to the sensing function network element.

Optionally, the echo signal quality includes at least one of the following:
a power of an echo signal, a signal-to-noise ratio SNR of the echo signal, a signal-to-interference-plus-noise ratio SINR of the echo signal, a reference signal received power RSRP of the echo signal, or reference signal received quality RSRQ of the echo signal.

Optionally, after the detection result that the sensing object is detected is obtained based on the echo signal quality, the sensing apparatus further includes:

a first extraction module, configured to extract a target parameter of the sensing object relative to each of the first device and the second device based on the measured quantity and the echo signal quality; or
a third receiving module, configured to receive the target parameter of the sensing object relative to each of the first device and the second device.

The target parameter includes at least one of the following:
angle, distance, and speed.

Optionally, after the first obtaining unit obtains, based on the echo signal, the detection result of whether the sensing object is detected, the sensing apparatus further includes one of the following:

a first execution module, configured to stop receiving the fourth echo signal of the first signal sent by the second device by using the third received beam indicated by the first beam sweeping mode in a case that the detection result indicates that the sensing object is detected; and

a second execution module, configured to record, in a case that the detection result indicates that the sensing object is detected, the target parameter of the sensing object detected by the second received beam relative to each of the first device and the second device, and receive, by using the third received beam indicated by the first beam sweeping mode, the fourth echo signal of the first signal sent by the second device.

The target parameter includes at least one of the following:
angle, distance, and speed.

Optionally, the apparatus further includes

an update module, configured to receive a fifth echo signal of the first signal at a recorded angle of the sensing object relative to the first device based on a preset time interval, and update the recorded target parameter of the sensing object relative to each of the first device and the second device based on the fifth echo signal.

Optionally, the preset time interval is determined by at least one of the following steps:

searching a lookup table based on a radar cross section RCS and motion characteristics of the sensing object, the motion characteristics including at least one of a motion speed or a motion acceleration; and

calculating a preset time interval at a second distance based on a first distance and a reference time interval between the first device and the sensing object.

Optionally, the apparatus further includes

a fourth sending module, configured to send the target parameter of the sensing object relative to each of the first device and the second device to the second device or the sensing function network element.

Optionally, the first obtaining module 1502 is configured to implement one of the following steps:

determining the first received beam used at the second moment based on the first echo signal and an angle of the sensing object relative to the first device at the first moment;

determining the first received beam used at the second moment based on a predicted value of an angle of the sensing object relative to the first device obtained at the second moment based on the first echo signal; and

receiving the first received beam used at the second moment sent by the sensing function network element.

It should be noted that, in embodiments of this application, the echo signal of the first signal sent by the second device is received based on each received beam determined by the first beam sweeping mode. In a case that it is determined based on the first echo signal received at the first moment that the sensing object is detected, the first received beam used at the second moment is obtained based on the first echo signal. Then the second echo signal of the first signal sent by the first device is received at the second moment based on the first received beam. In this way, adaptive adjustment of the received beam is realized, which can optimize system search and improve tracking efficiency.

The sensing apparatus in this embodiment of this application may be an electronic device, for example, an electronic device having an operating system, or may be a component in the electronic device, for example, an integrated circuit or a chip. The electronic device may be a terminal, or may be another device other than the terminal. In an example, the terminal may include but is not limited to the above listed type of the terminal 11, and the other device may be a server, a network attached storage (Network Attached Storage, NAS), or the like. This is not specifically limited in embodiments of this application.

The sensing apparatus provided in this embodiment of this application can implement all of the processes implemented in the method embodiment of FIG. 2, and achieve the same technical effects. To avoid repetition, details are not described herein again.

An embodiment of this application further provides a communication device. The communication device is a first device, including a processor and a communication interface. The communication interface is configured to receive, based on each received beam determined by a first beam sweeping mode, an echo signal of a first signal sent by a second device. The processor is configured to obtain, in a case that it is determined based on a first echo signal received at a first moment that a sensing object is detected, a first received beam used at a second moment based on the first echo signal. The communication interface is configured to receive, at the second moment based on the first received beam, a second echo signal of a first signal sent by the first device.

The second moment is a moment after the first moment.

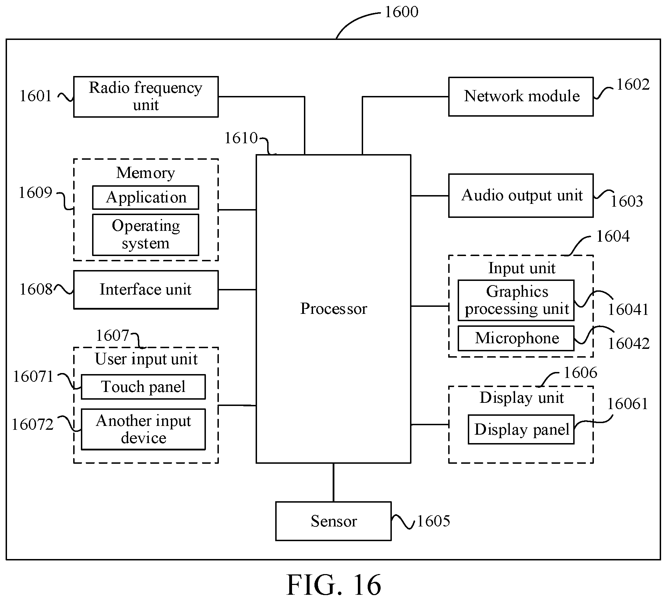

The communication device embodiment corresponds to the above first device-side method embodiment. The implementation processes and implementations of the above method embodiment may all be applicable to the terminal embodiment, and can achieve the same technical effects. Specifically, FIG. 16 is a schematic diagram of a hardware structure of a first device for implementing an embodiment of this application.

A first device 1600 includes but is not limited to at least some of components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

A person skilled in the art may understand that the terminal 1600 may further include a power supply (such as a battery) that supplies power to various components. The power supply may be logically connected to the processor 1610 through a power management system, thereby implementing functions such as management of charging, discharging, and power consumption through the power management system. The structure of the first device shown in FIG. 16 constitutes no limitation on the terminal, and the terminal may include more or fewer components than those shown in the figure, or some merged components, or different component arrangements. Details are not described herein again.

It should be understood that in this embodiment of this application, the input unit 1604 may include a graphics processing unit (Graphics Processing Unit, GPU) 16041 and a microphone 16042. The graphics processing unit 16041 processes image data of a static picture or a video obtained by an image capture apparatus (for example, a camera) in a video capture mode or an image capture mode. The display unit 1606 may include a display panel 16061. The display panel 16061 may be configured in a form such as a liquid crystal display or an organic light-emitting diode. The user input unit 1607 includes at least one of a touch panel 16071 and another input device 16072. The touch panel 16071 is also referred to as a touch screen. The touch panel 16071 may include two parts: a touch detection apparatus and a touch controller. The another input device 16072 may include but is not limited to a physical keyboard, a function button (such as a volume control button or a power button), a trackball, a mouse, and a joystick. Details are not described herein.

In this embodiment of this application, the radio frequency unit 1601 receives downlink data from a network side device and may provide the downlink data to the processor 1610 for processing. In addition, the radio frequency unit 1601 may send uplink data to the network side device. Generally, the radio frequency unit 1601 includes but is not limited to an antenna, an amplifier, a transceiver, a coupler, a low noise amplifier, a duplexer, and the like.

The memory 1609 may be configured to store a software program or an instruction and various data. The memory 1609 may mainly include a first storage area storing a program or an instruction and a second storage area storing data. The first storage area may store an operating system, an application or an instruction required for at least one function (such as a sound playback function or an image playback function), and the like. In addition, the memory 1609 may include a volatile memory or a non-volatile memory, or the memory 1609 may include both the volatile memory and the non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synchlink DRAM (Synchlink DRAM, SLDRAM), and a direct rambus RAM (Direct Rambus RAM, DRRAM). The memory 16016 in this embodiment of this application includes but is not limited to these and any other suitable types of memories.

The processor 1610 may include one or more processing units. Optionally, the processor 1610 integrates an application processor and a modem processor. The application processor mainly processes operations related to an operating system, a user interface, an application, and the like. The modem processor mainly processes a wireless communication signal, for example, may be a baseband processor. It may be understood that the above modem processor may alternatively not be integrated into the processor 1610.

The radio frequency unit 1601 is configured to receive, based on each received beam determined by a first beam sweeping mode, an echo signal of a first signal sent by a second device.

The processor 1610 is configured to obtain, in a case that it is determined based on a first echo signal received at a first moment that a sensing object is detected, a first received beam used at a second moment based on the first echo signal.

The radio frequency unit 1601 is configured to receive, at the second moment based on the first received beam, a second echo signal of a first signal sent by the first device.

The second moment is a moment after the first moment.

Optionally, the first beam sweeping mode includes at least one of the following:

a beam sweeping range, an arrangement of swept beams, and a beam sweeping sequence.

Optionally, an obtaining manner of the beam sweeping range includes one of the following:

determining the beam sweeping range based on priori information of a spatial range of the sensing object in sensing priori information and a position of the first device; and
receiving the beam sweeping range sent by a sensing function network element.

Optionally, the priori information of the spatial range includes one of the following:

coordinates of a boundary or a vertex of the spatial range; and
center coordinates and a distribution range of a relative center of the spatial range.

Optionally, in a case that the priori information of the spatial range includes the coordinates of the boundary or the vertex of the spatial range, all spatial positions within the spatial range have a same detection priority.
Optionally, in a case that the priori information of the spatial range includes the center coordinates and the distribution range of the relative center of the spatial range, a detection priority of a spatial position at the center within the spatial range is higher than a detection priority of a spatial position at an edge within the spatial range.
Optionally, an obtaining manner of the arrangement of swept beams includes one of the following:

determining the arrangement of swept beams based on the beam sweeping range, and priority information and a beam width within a sweeping range; and
receiving the arrangement of swept beams sent by the sensing function network element.

Optionally, the manner of determining the arrangement of swept beams based on the beam sweeping range, and priority information and a beam width within a sweeping range includes one of the following:

determining a proportionality coefficient for a beam spacing and a beam width of two adjacent beams as a preset value;
determining the proportionality coefficient for the beam spacing and the beam width of the two adjacent beams based on the beam sweeping range and the beam width; and
determining the proportionality coefficient for the beam spacing and the beam width of the two adjacent beams according to a first criterion.

The first criterion includes that spatial positions with different detection priorities within a spatial range use different proportionality coefficients.
Optionally, a beam arrangement mode of the arrangement of swept beams includes at least one of the following:

an arrangement in rows and columns; and
an arrangement in circles.

Optionally, the beam sweeping sequence includes one of the following:

sweeping in rows and columns;
sweeping in circles; and
sweeping in regions.

Optionally, the sweeping in regions satisfies at least one of the following:

sweeping each region in rows and columns; and
sweeping each region in circles.

Optionally, the radio frequency unit 1601 is configured to receive, by using a second received beam indicated by the first beam sweeping mode, a third echo signal of the first signal sent by the second device.
The processor 1610 is configured to obtain, based on the third echo signal, a detection result of whether the sensing object is detected.
The radio frequency unit 1601 is configured to receive, by using the third received beam indicated by the first beam sweeping mode, a fourth echo signal of the first signal sent by the second device in a case that the detection result indicates that the sensing object is not detected.
The third received beam is a received beam located after the second received beam in the first beam sweeping mode.
Optionally, the processor 1610 is configured to

compare obtained echo signal quality with a preset value after the first device performs a first operation, to determine the detection result of whether the sensing object is detected; or

the radio frequency unit 1601 is configured to receive, after the first device performs a second operation, the detection result of whether the sensing object is detected sent by the sensing function network element.

The first operation includes one of the following:

sending the third echo signal to the sensing function network element, and receiving a measured quantity and the echo signal quality fed back by the sensing function network element;

performing radar signal processing on the third echo signal to determine the measured quantity, and determining the echo signal quality based on the measured quantity;

performing radar signal processing on the third echo signal to determine the measured quantity, sending the measured quantity to the sensing function network element, and receiving the echo signal quality fed back by the sensing function network element;

obtaining a first part of the measured quantity based on partial calculation of the third echo signal on which the radar signal processing is performed, sending the first part to the sensing function network element, and receiving a second part of the measured quantity and the echo signal quality fed back by the sensing function network element, the first part being a part at a relatively low grade among parts with different grades included in the measured quantity, and the second part being a part at a relatively high grade among the parts with different grades included in the measured quantity; and

obtaining the first part of the measured quantity based on the partial calculation of the third echo signal on which the radar signal processing is performed, sending the first part to the sensing function network element, receiving the second part of the measured quantity fed back by the sensing function network element, and determining the echo signal quality based on the first part and the second part.

The second operation includes one of the following:

performing the radar signal processing on the third echo signal to determine the measured quantity, and sending the measured quantity to the sensing function network element;

sending the third echo signal to the sensing function network element;

obtaining the first part of the measured quantity based on the partial calculation of the third echo signal on which the radar signal processing is performed, and sending the first part to the sensing function network element; and

performing the radar signal processing on the third echo signal to determine the measured quantity, determining the echo signal quality based on the measured quantity, and sending the measured quantity and the echo signal quality to the sensing function network element.

Optionally, the echo signal quality includes at least one of the following:

a power of an echo signal, a signal-to-noise ratio SNR of the echo signal, a signal-to-interference-plus-noise ratio SINR of the echo signal, a reference signal received power RSRP of the echo signal, or reference signal received quality RSRQ of the echo signal.

Optionally, the processor 1610 is configured to:

extract a target parameter of the sensing object relative to each of the first device and the second device based on the measured quantity and the echo signal quality; or

the radio frequency unit 1601 is configured to receive the target parameter of the sensing object relative to each of the first device and the second device.

The target parameter includes at least one of the following:

angle, distance, and speed.

Optionally, the processor 1610 is configured to:

stop receiving the fourth echo signal of the first signal sent by the second device by using the third received beam indicated by the first beam sweeping mode in a case that the detection result indicates that the sensing object is detected; and

record, in a case that the detection result indicates that the sensing object is detected, a target parameter of the sensing object detected by the second received beam relative to each of the first device and the second device, and receive, by the first device by using the third received beam indicated by the first beam sweeping mode, the fourth echo signal of the first signal sent by the second device.

The target parameter includes at least one of the following:

angle, distance, and speed.

Optionally, the processor 1610 is further configured to:

receive a fifth echo signal of the first signal at a recorded angle of the sensing object relative to the first device based on a preset time interval, and update the recorded target parameter of the sensing object relative to each of the first device and the second device based on the fifth echo signal.

Optionally, the preset time interval is determined by at least one of the following steps:

searching a lookup table based on a radar cross section RCS and motion characteristics of the sensing object, the motion characteristics including at least one of a motion speed or a motion acceleration; and

calculating a preset time interval at a second distance based on a first distance and a reference time interval between the first device and the sensing object.

Optionally, the radio frequency unit 1601 is configured to

send the target parameter of the sensing object relative to each of the first device and the second device to the second device or the sensing function network element.

Optionally, the processor 1610 is configured to implement one of the following steps:

determining the first received beam used at the second moment based on the first echo signal and an angle of the sensing object relative to the first device at the first moment;

determining the first received beam used at the second moment based on a predicted value of an angle of the sensing object relative to the first device obtained at the second moment based on the first echo signal; and

receiving the first received beam used at the second moment sent by the sensing function network element.

It should be noted that, in embodiments of this application, the echo signal of the first signal sent by the second device is received based on each received beam determined by the first beam sweeping mode. In a case that it is determined based on the first echo signal received at the first moment that the sensing object is detected, the first received beam used at the second moment is obtained based on the first echo signal. Then the second echo signal of the first signal sent by the first device is received at the second moment based on the first received beam. In this way, adaptive adjustment of the received beam is realized, which can optimize system search and improve tracking efficiency.

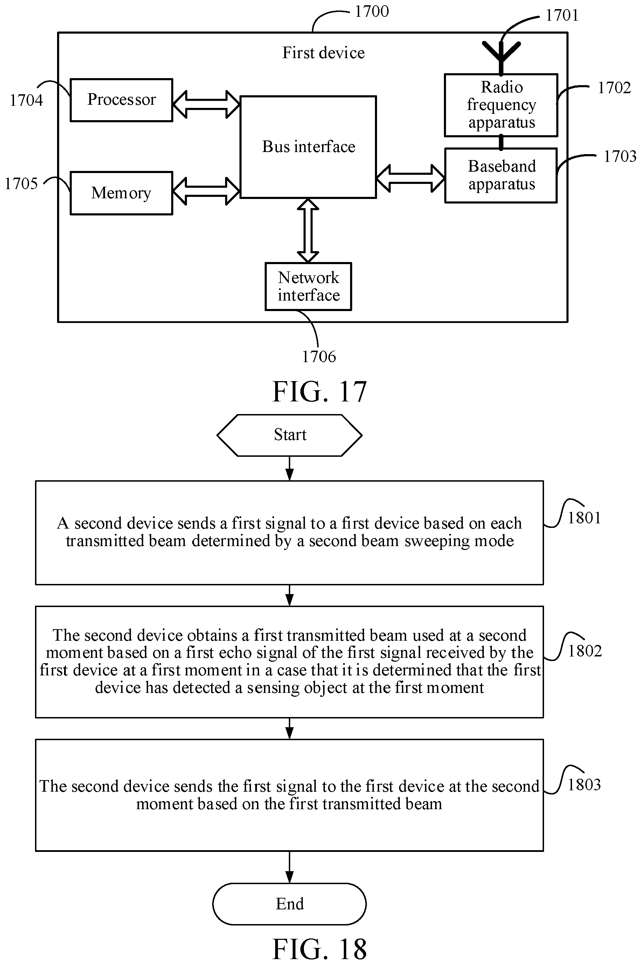

Specifically, FIG. 17 is a schematic diagram of a hardware structure of another first device for implementing an embodiment of this application.

As shown in FIG. 17, a first device 1700 includes an antenna 1701, a radio frequency apparatus 1702, a baseband apparatus 1703, a processor 1704, and a memory 1705. The antenna 1701 is connected to the radio frequency apparatus 1702. In an uplink direction, the radio frequency apparatus 1702 receives information through the antenna 1701 and sends the received information to the baseband apparatus 1703 for processing. In a downlink direction, the baseband apparatus 1703 processes to-be-sent information and sends the to-be-sent information to the radio frequency apparatus 1702. The radio frequency apparatus 1702 processes the received information and then sends the information through the antenna 1701.

In the above embodiment, the method performed by the first device may be implemented in the baseband apparatus 1703. The baseband apparatus 1703 includes a baseband processor.

The baseband apparatus 1703 may include, for example, at least one baseband board. A plurality of chips are arranged on the baseband board, as shown in FIG. 17. One of the chips is, for example, the baseband processor, and is connected to the memory 1705 through a bus interface to call a program in the memory 1705 to perform the operations of the network device shown in the above method embodiment.

A network side device may further include a network interface 1706. The interface is, for example, a common public radio interface (common public radio interface, CPRI).

Specifically, the first device 1700 in this embodiment of this application further includes an instruction or a program stored in the memory 1705 and executable on the processor 1704. The processor 1704 calls the instruction or the program in the memory 1705 to perform the method performed by each module shown in FIG. 15, and achieves the same technical effects. To avoid repetition, details are not described herein.

As shown in FIG. 18, an embodiment of this application further provides a sensing method, including the following steps:

Step 1801: Send a first signal to a first device based on each transmitted beam determined by a second beam sweeping mode.

Step 1802: Obtain a first transmitted beam used at a second moment based on a first echo signal of the first signal received by the first device at a first moment, in a case that it is determined that the first device has detected a sensing object at the first moment.
Step 1803: Send the first signal to the first device at the second moment based on the first transmitted beam.

The second moment is a moment after the first moment.

Optionally, the second beam sweeping mode includes at least one of a beam sweeping range, an arrangement of swept beams, and a beam sweeping sequence.

Optionally, the sending a first signal to a first device based on each transmitted beam determined by a second beam sweeping mode includes:

obtaining, by the second device, a detection result of whether the first device detects the sensing object, after sending the first signal to the second device based on a second transmitted beam indicated by the second beam sweeping mode; and

sending, by the second device, the first signal to the first device based on a third transmitted beam indicated by the second beam sweeping mode in a case that the detection result indicates that the first device has not detected the sensing object.

The third transmitted beam is a transmitted beam located after the second transmitted beam in the second beam sweeping mode.

Optionally, the obtaining a detection result of whether the first device detects the sensing object includes:

receiving, by the second device, the detection result of whether the first device detects the sensing object sent by a sensing function network element, and a target parameter of the detected sensing object relative to each of the first device and the second device; or

receiving, by the second device, the detection result of whether the first device detects the sensing object sent by the first device, and the target parameter of the detected sensing object relative to each of the first device and the second device.

Optionally, after the obtaining a detection result of whether the first device detects the sensing object, the method further includes one of the following:

stopping sending, by the second device, the first signal to the first device by using the third transmitted beam indicated by the second beam sweeping mode in a case that the detection result indicates that the first device has detected the sensing object; and

sending, by the second device, the first signal to the first device based on the third transmitted beam indicated by the second beam sweeping mode in a case that the detection result indicates that the first device has detected the sensing object.

Optionally, the obtaining a first transmitted beam used at a second moment based on a first echo signal of the first signal received by the first device at the first moment includes:

determining, by the second device based on an angle of the sensing object relative to the second device at the first moment, the first transmitted beam used at the second moment; or

determining, by the second device based on a predicted value of an angle of the sensing object relative to the second device at the second moment, the first transmitted beam used at the second moment; or

receiving the first transmitted beam used at the second moment sent by a sensing function network element.

Optionally, an obtaining manner of the beam sweeping range includes at least one of the following:

determining the beam sweeping range based on priori information of a spatial range of the sensing object in sensing priori information and a position of the second device; and

receiving the beam sweeping range sent by a sensing function network element.

Optionally, the priori information of the spatial range includes one of the following:

coordinates of a boundary or a vertex of the spatial range; and
center coordinates and a distribution range of a relative center of the spatial range.

Optionally, in a case that the priori information of the spatial range includes the coordinates of the boundary or the vertex of the spatial range, all spatial positions within the spatial range have a same detection priority.

Optionally, in a case that the priori information of the spatial range includes the center coordinates and the distribution range of the relative center of the spatial range, a detection priority of a spatial position at the center within the spatial range is higher than a detection priority of a spatial position at an edge within the spatial range.

Optionally, an obtaining manner of the arrangement of swept beams includes one of the following:

determining the arrangement of swept beams based on the beam sweeping range, and priority information and a beam width within a sweeping range; and
receiving the arrangement of swept beams sent by the sensing function network element.

Optionally, the determining the arrangement of swept beams based on the beam sweeping range, and priority information and a beam width within a sweeping range includes one of the following:

determining a proportionality coefficient for a beam spacing and a beam width of two adjacent beams as a preset value;
determining the proportionality coefficient for the beam spacing and the beam width of the two adjacent beams based on the beam sweeping range and the beam width; and
determining the proportionality coefficient for the beam spacing and the beam width of the two adjacent beams according to a first criterion.

The first criterion includes that spatial positions with different detection priorities within a spatial range use different proportionality coefficients.

Optionally, a beam arrangement mode of the arrangement of swept beams includes at least one of the following:

an arrangement in rows and columns; and
an arrangement in circles.

Optionally, the beam sweeping sequence includes one of the following:

sweeping in rows and columns;
sweeping in circles; and
sweeping in regions.

Optionally, the sweeping in regions satisfies at least one of the following:

sweeping each region in rows and columns; and
sweeping each region in circles.

Optionally, the second beam sweeping mode may be understood as a transmitted beam sweeping mode. Specifically, a specific obtaining principle of the transmitted beam sweeping mode is the same as the obtaining principle of a received beam sweeping mode. For details, reference may be made to the embodiments of first device side. Details are not described herein again.

It should be noted that, this embodiment of this application is a method embodiment of a second device terminal corresponding to the above embodiment of the first device side. All of the implementations of the first device side are applicable to the embodiments of the second device, and can also achieve the same technical effects. Details are not described herein again.

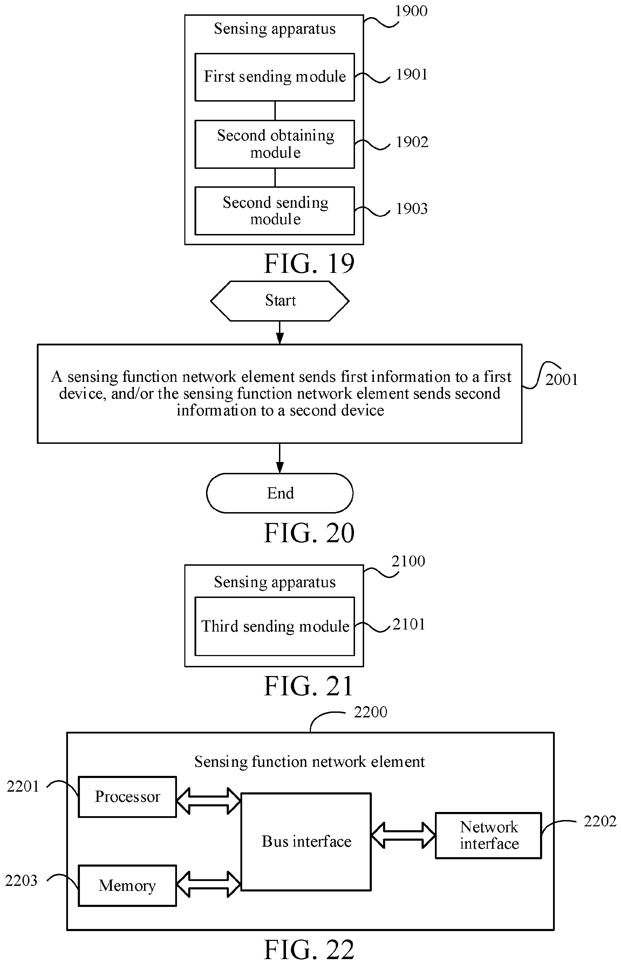

As shown in FIG. 19, an embodiment of this application further provides a sensing apparatus 1900, applied to a second device, and including:

a first sending module 1901, configured to send a first signal to a first device based on each transmitted beam determined by a second beam sweeping mode;
a second obtaining module 1902, configured to obtain a first transmitted beam used at a second moment based on a first echo signal of the first signal received by the first device at the first moment, in a case that it is determined that the first device has detected a sensing object at a first moment; and
a second sending module 1903, configured to send the first signal to the first device at the second moment based on the first transmitted beam.

The second moment is a moment after the first moment.

Optionally, the second beam sweeping mode includes at least one of a beam sweeping range, an arrangement of swept beams, and a beam sweeping sequence.

Optionally, the first sending module 1901 includes:

a second obtaining unit, configured to obtain a detection result of whether the first device detects the sensing object, after sending the first signal to the second device based on a second transmitted beam indicated by the second beam sweeping mode; and

a second execution unit, configured to send the first signal to the first device by the second device based on a third transmitted beam indicated by the second beam sweeping mode in a case that the detection result indicates that the first device has not detected the sensing object.

The third transmitted beam is a transmitted beam located after the second transmitted beam in the second beam sweeping mode.

Optionally, the second obtaining unit is configured to:

receive the detection result of whether the first device detects the sensing object sent by a sensing function network element, and a target parameter of the detected sensing object relative to each of the first device and the second device; or

receive, by the second device, the detection result of whether the first device detects the sensing object sent by the first device, and the target parameter of the detected sensing object relative to each of the first device and the second device.

Optionally, after the second obtaining unit obtains the detection result of whether the first device detects the sensing object, the apparatus further includes one of the following:

a third execution module, configured to stop sending the first signal to the first device by using the third transmitted beam indicated by the second beam sweeping mode in a case that the detection result indicates that the first device has detected the sensing object; and

a fourth execution module, configured to send the first signal to the first device based on the third transmitted beam indicated by the second beam sweeping mode in a case that the detection result indicates that the first device has detected the sensing object.

Optionally, the second obtaining module 1902 is configured to implement the following steps:

determining the first transmitted beam used at the second moment based on an angle of the sensing object relative to the second device at the first moment; or

determining the first transmitted beam used at the second moment based on a predicted value of an angle of the sensing object relative to the second device at the second moment; or

receiving the first transmitted beam used at the second moment sent by a sensing function network element.

Optionally, an obtaining manner of the beam sweeping range includes at least one of the following:

determining the beam sweeping range based on priori information of a spatial range of the sensing object in sensing priori information and a position of the second device; and

receiving the beam sweeping range sent by a sensing function network element.

Optionally, the priori information of the spatial range includes one of the following:

coordinates of a boundary or a vertex of the spatial range; and

center coordinates and a distribution range of a relative center of the spatial range.

Optionally, in a case that the priori information of the spatial range includes the coordinates of the boundary or the vertex of the spatial range, all spatial positions within the spatial range have a same detection priority.

Optionally, in a case that the priori information of the spatial range includes the center coordinates and the distribution range of the relative center of the spatial range, a detection priority of a spatial position at the center within the spatial range is higher than a detection priority of a spatial position at an edge within the spatial range.

Optionally, an obtaining manner of the arrangement of swept beams includes one of the following:

determining the arrangement of swept beams based on the beam sweeping range, and priority information and a beam width within a sweeping range; and
receiving the arrangement of swept beams sent by the sensing function network element.

Optionally, the determining the arrangement of swept beams based on the beam sweeping range, and priority information and a beam width within a sweeping range includes one of the following:

determining a proportionality coefficient for a beam spacing and a beam width of two adjacent beams as a preset value;
determining the proportionality coefficient for the beam spacing and the beam width of the two adjacent beams based on the beam sweeping range and the beam width; and
determining the proportionality coefficient for the beam spacing and the beam width of the two adjacent beams according to a first criterion.

The first criterion includes that spatial positions with different detection priorities within a spatial range use different proportionality coefficients.
Optionally, a beam arrangement mode of the arrangement of swept beams includes at least one of the following:

an arrangement in rows and columns; and
an arrangement in circles.

Optionally, the beam sweeping sequence includes one of the following:

sweeping in rows and columns;
sweeping in circles; and
sweeping in regions.

Optionally, the sweeping in regions satisfies at least one of the following:

sweeping each region in rows and columns; and
sweeping each region in circles.

The sensing apparatus provided in this embodiment of this application can implement all of the processes implemented in the method embodiment of FIG. 18, and achieve the same technical effects. To avoid repetition, details are not described herein again.
An embodiment of this application further provides a communication device. The communication device is a second device, including a processor and a communication interface. The communication interface is configured to send a first signal to a first device based on each transmitted beam determined by a second beam sweeping mode. The processor is configured to obtain a first transmitted beam used at a second moment based on a first echo signal of the first signal received by the first device at the first moment, in a case that it is determined that the first device has detected a sensing object at a first moment. The communication interface is configured to send the first signal to the first device at the second moment based on the first transmitted beam.
The second moment is a moment after the first moment.
The communication device embodiment corresponds to the above second device-side method embodiment. The implementation processes and implementations of the above method embodiment may all be applicable to the terminal embodiment, and can achieve the same technical effects.
Specifically, for a hardware structure of the second device in this embodiment of this application, reference may be made to FIG. 16 or FIG. 17. Details are not described herein again.
As shown in FIG. 20, an embodiment of this application further provides a sensing method, including the following steps:
Step 2001: A sensing function network element sends first information to a first device, and/or the sensing function network element sends second information to a second device.
The first information includes at least one of the following:

a first beam sweeping mode; and
a first received beam used by the first device at a second moment.

The second information includes at least one of the following:

a second beam sweeping mode; and
a first transmitted beam used by the second device at the second moment.

Optionally, the method further includes:

obtaining, by the sensing function network element, a measured quantity and echo signal quality of an echo signal of a third signal received by the first device; and
obtaining, by the sensing function network element based on the measured quantity and the echo signal quality, a detection result of whether the first device detects a sensing object, and a target parameter of the detected sensing object relative to each of the first device and the second device.

The target parameter includes at least one of the following:
angle, distance, and speed.

Optionally, the obtaining a measured quantity and echo signal quality of a third echo signal of a first signal received by the first device includes one of the following:

receiving, by the sensing function network element, the measured quantity and the echo signal quality sent by the first device;
receiving, by the sensing function network element, the measured quantity sent by the first device, and determining the echo signal quality of the third echo signal based on the measured quantity;
receiving, by the sensing function network element, the third echo signal sent by the first device, performing radar signal processing on the third echo signal to determine the measured quantity, and determining the echo signal quality of the third echo signal based on the measured quantity; and
receiving, by the sensing function network element, a first part of the measured quantity corresponding to the third echo signal of the first signal sent by the first device, obtaining a second part of the measured quantity based on the first part, and determining the echo signal quality of the third echo signal based on the first part and the second part, wherein

The first part is a part at a first grade among parts with different grades included in the measured quantity, and the second part is a part at a second grade among the parts with different grades included in the measured quantity.

Optionally, the obtaining a detection result of whether the first device detects the sensing object includes:

comparing the echo signal quality with a preset value; and
determining that the detection result is that the sensing object is detected in a case that the echo signal quality is greater than the preset value, or otherwise determining that the detection result is that the sensing object is not detected.

Optionally, in a case that it is determined that the detection result is that the sensing object is detected, the method further includes:
extracting the target parameter of the sensing object relative to each of the first device and the second device.

Optionally, after the obtaining a detection result of whether the first device detects the sensing object, the method further includes:
sending the detection result to the first device and/or the second device.

Optionally, an obtaining manner of the first received beam used by the first device at the second moment includes one of the following:

determining, by the sensing function network element based on an obtained angle of the sensing object relative to the first device at the first moment, the first received beam used at the second moment; and
determining, by the sensing function network element based on an obtained predicted value of the angle of the sensing object relative to the first device at the second moment, the first received beam used at the second moment.

Optionally, an obtaining manner of the first transmitted beam used by the second device at the second moment includes:

determining, by the sensing function network element based on an obtained predicted value of an angle of the sensing object relative to the second device at the second moment, the first transmitted beam used at the second moment; and
determining, by the sensing function network element based on an obtained angle of the sensing object relative to the second device at the first moment, the first transmitted beam used at the second moment.

Optionally, the method further includes one of the following:

receiving a third echo signal sent by the first device, obtaining a measured quantity and echo signal quality based on the third echo signal, and sending the measured quantity and the echo signal quality to the first device;
receiving the measured quantity sent by the first device, obtaining the echo signal quality based on the measured quantity, and sending the echo signal quality to the first device;
receiving a first part of the measured quantity sent by the first device, obtaining a second part of the measured quantity based on the first part, determining the echo signal quality based on the first part and the second part, and sending the second part and the echo signal quality to the first device; and
receiving the first part of the measured quantity sent by the first device, determining the second part of the measured quantity based on the first part, and sending the second part to the first device.

The first part is a part at a first grade among parts with different grades included in the measured quantity, and the second part is a part at a second grade among the parts with different grades included in the measured quantity.
It should be noted that, this embodiment of this application is a method embodiment of a sensing function network element corresponding to the above embodiment of the first device side. All of the implementations of the first device side are applicable to the embodiments of the sensing function network element, and can also achieve the same technical effects. Details are not described herein again.
As shown in FIG. 21, an embodiment of this application further provides a sensing apparatus 2100, applied to a sensing function network element, and including:

a third sending module 2101, configured to: send first information to a first device; and/or
send second information to a second device.

The first information includes at least one of the following:

a first beam sweeping mode; and
a first received beam used by the first device at a second moment.

The second information includes at least one of the following:

a second beam sweeping mode; and
a first transmitted beam used by the second device at the second moment.

Optionally, the sensing apparatus 2100 further includes:

a third obtaining module, configured to obtain a measured quantity and echo signal quality of an echo signal of a third signal received by the first device; and
a fourth obtaining module, configured to obtain, based on the measured quantity and the echo signal quality, a detection result of whether the first device detects a sensing object, and a target parameter of the detected sensing object relative to each of the first device and the second device.

The target parameter includes at least one of the following:
angle, distance, and speed.
Optionally, the third obtaining module is configured to implement one of the following steps:

receiving the measured quantity and the echo signal quality sent by the first device;
receiving the measured quantity sent by the first device, and determining the echo signal quality of the third echo signal based on the measured quantity;
receiving the measured quantity sent by the first device, and determining the echo signal quality of the third echo signal based on the measured quantity;
receiving the third echo signal sent by the first device, performing radar signal processing on the third echo signal to determine the measured quantity, and determining the echo signal quality of the third echo signal based on the measured quantity; and
receiving a first part of the measured quantity corresponding to the third echo signal of the first signal sent by the first device, obtaining a second part of the measured quantity based on the first part, and determining the echo signal quality of the third echo signal based on the first part and the second part.

The first part is a part at a first grade among parts with different grades included in the measured quantity, and the second part is a part at a second grade among the parts with different grades included in the measured quantity.

Optionally, when the fourth obtaining module obtains the detection result of whether the first device detects the sensing object, the sensing apparatus includes:

a comparison unit, configured to compare the echo signal quality with a preset value; and
a determination unit, configured to determine that the detection result is that the sensing object is detected in a case that the echo signal quality is greater than the preset value, or otherwise determine that the detection result is that the sensing object is not detected.

Optionally, in a case that it is determined that the detection result is that the sensing object is detected, the sensing apparatus 2100 further includes:
a second extraction module, configured to extract the target parameter of the sensing object relative to each of the first device and the second device.

Optionally, after the third obtaining module obtains the detection result of whether the first device detects the sensing object, the sensing apparatus further includes:
a fifth sending module, configured to send the detection result to the first device and/or the second device.

Optionally, an obtaining manner of the first received beam used by the first device at the second moment includes one of the following:

determining the first received beam used at the second moment based on an obtained angle of the sensing object relative to the first device at the first moment; and
determining the first received beam used at the second moment based on an obtained predicted value of the angle of the sensing object relative to the first device at the second moment.

Optionally, an obtaining manner of the first transmitted beam used by the second device at the second moment includes:

determining the first transmitted beam used at the second moment based on an obtained predicted value of an angle of the sensing object relative to the second device at the second moment;
determining the first transmitted beam used at the second moment based on an obtained angle of the sensing object relative to the second device at the first moment.

Optionally, the sensing apparatus 2100 further includes one of the following:

a fifth execution module, configured to receive a third echo signal sent by the first device, obtain a measured quantity and echo signal quality based on the third echo signal, and send the measured quantity and the echo signal quality to the first device;
a sixth execution module, configured to receive the measured quantity sent by the first device, obtain the echo signal quality based on the measured quantity, and send the echo signal quality to the first device;
a seventh execution module, configured to receive a first part of the measured quantity sent by the first device, obtain a second part of the measured quantity based on the first part, determine the echo signal quality based on the first part and the second part, and send the second part and the echo signal quality to the first device; and
an eighth execution module, configured to receive the first part of the measured quantity sent by the first device, determine the second part of the measured quantity based on the first part, and send the second part to the first device.

The first part is a part at a first grade among parts with different grades included in the measured quantity, and the second part is a part at a second grade among the parts with different grades included in the measured quantity.

It should be noted that, the apparatus embodiment is an apparatus corresponding to the above method. All of the implementations of the above method embodiment are applicable to the apparatus embodiment, and can also achieve the same technical effects. Details are not described herein again.

Optionally, an embodiment of this application further provides a communication device. The communication device is a sensing function network element, and includes a processor, a memory, a program or an instruction stored in the memory and executable on the processor. The program or the instruction, when executed by the processor, implements the processes of embodiment of the sensing method embodiment applied to a sensing function network element side, and can achieve the same technical effects. To avoid repetition, details are not described herein again.

An embodiment of this application further provides a readable storage medium. The computer-readable storage medium stores a program or an instruction. The program or the instruction, when executed by a processor, implements the processes of embodiment of the sensing method embodiment applied to a sensing function network element side, and can achieve the same technical effects. To avoid repetition, details are not described herein again.

The computer-readable storage medium is, for example, a read-only memory (Read-Only Memory, ROM), a random access memory (Random Access Memory, RAM), a magnetic disk, or an optical disk.

An embodiment of this application further provides a communication device. The communication device is a sensing function network element, including a processor and a communication interface. The communication interface is configured to send first information to a first device, and/or

send second information to a second device.

The first information includes at least one of the following:

a first beam sweeping mode; and
a first received beam used by the first device at a second moment.

The second information includes at least one of the following:

a second beam sweeping mode; and
a first transmitted beam used by the second device at the second moment.

The embodiment of the sensing function network element corresponds to the method embodiment of the above sensing function network element. The implementation processes and implementations of the above method embodiment may be all applicable to the embodiment of the sensing function network element, and can achieve the same technical effects.

Specifically, an embodiment of this application further provides a sensing function network element. As shown in FIG. 22, a sensing function network element 2200 includes a processor 2201, a network interface 2202, and a memory 2203. The network interface 2202 is, for example, a common public radio interface (common public radio interface, CPRI).

Specifically, the sensing function network element 2200 in this embodiment of this application further includes an instruction or a program stored in the memory 2203 and executable on the processor 2201. The processor 2201 calls the instruction or the program in the memory 2203 to perform the method performed by each module shown in FIG. 21, and achieves the same technical effects. To avoid repetition, details are not described herein.

An embodiment of this application further provides a readable storage medium. The readable storage medium stores a program or an instruction. The program or the instruction, when executed by a processor, implements the processes of the above sensing method embodiment, and can achieve the same technical effects. To avoid repetition, details are not described herein again.

The processor is a processor in the terminal described in the above embodiments. The readable storage medium includes a computer-readable storage medium, such as a computer read-only memory ROM, a random access memory RAM, a magnetic disk, or an optical disk.

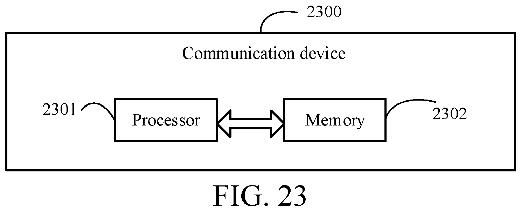

Optionally, as shown in FIG. 23, an embodiment of this application further provides a communication device 2300, including a processor 2301 and a memory 2302. The memory 2302 stores program or an instruction executable on the processor 2301. For example, when the communication device 2300 is a first device, the program or the instruction, when executed by the processor 2301, implements the steps of the above sensing method embodiment, and can achieve the same technical effects. When the communication device 2300 is a second device, the program or the instruction, when executed by the processor 2301, implements the steps of the above sensing method embodiment, and can achieve the same technical effects. When the communication device 2300 is a sensing function network element, the program or the instruction, when executed by the processor 2301, implements the steps of the above sensing method embodiment, and can achieve the same technical effects. To avoid repetition, details are not described herein again.

An embodiment of this application further provides a chip. The chip includes a processor and a communication interface. The communication interface is coupled to the processor. The processor is configured to run a program or an instruction, to implement the processes of the above sensing method embodiment, and can achieve the same technical effects. To avoid repetition, details are not described herein again.

It should be understood that the chip in this embodiment of this application may also be referred to as a system level chip, a system chip, a chip system, a system on chip, or the like.

An embodiment of this application further provides a computer program product. The computer program product is stored in a storage medium. The computer program product is executed by at least one processor to implement the processes of the above sensing method embodiment, and can achieve the same technical effects. To avoid repetition, details are not described herein again.

An embodiment of this application further provides a communication system, including a first device, a second device, and a sensing function network element. The first device may be configured to perform the steps of the sensing method described above. The second device may be configured to perform the steps of the sensing method described above. The sensing function network element may be configured to perform the steps of the sensing method described above.

It should be noted that, a term "comprise", "include", or any other variant herein is intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by the phrase "include one ..." does not exclude existence of additional same elements in the process, the method, the article, or the apparatus that includes the element. In addition, it should be noted that the scope of the method and the apparatus in the embodiments of this application is not limited to function execution in the order shown or discussed, and may further include function execution in a substantially simultaneous manner or in the opposite order based on the functions. For example, the described method may be performed in different order from the described order, and various steps may also be added, omitted, or combined. In addition, features described with reference to some examples may be combined in another example.

According to the descriptions of the above implementations, a person skilled in the art may clearly learn that the method in the above embodiments may be implemented by software with a necessary universal hardware platform, or may be implemented by hardware. However, in many cases, the software with the universal hardware platform is a preferred implementation. Based on such an understanding, the technical solution of this application, in essence, or a part contributing to the prior art may be embodied in a form of a computer software product. The computer software product is stored in a storage medium (such as a ROM/RAM, a magnetic disk, or an optical disk), including several instructions for causing a terminal (such as a mobile phone, a computer, a server, an air conditioner, or a network device) to perform the method in the embodiments of this application.

Although embodiments of this application are described above with reference to the accompanying drawings, this application is not limited to the specific implementations described above. The above specific implementations are merely illustrative but not restrictive. With the enlightenment of this application, a person of ordinary skill in the art may make many forms without departing from the objective of this application and the protection scope of the claims. These forms fall within the protection scope of this application.

**Claims**

1. A sensing method, comprising:

   receiving, by a first device based on each received beam determined by a first beam sweeping mode, an echo signal of a first signal sent by a second device;
   obtaining, by the first device in a case that it is determined based on a first echo signal received at a first moment that a sensing object is detected, a first received beam used at a second moment based on the first echo signal; and
   receiving, by the first device at the second moment based on the first received beam, a second echo signal of a first signal sent by the first device, wherein
   the second moment is a moment after the first moment.

2. The method according to claim 1, wherein the first beam sweeping mode comprises at least one of the following: a beam sweeping range, an arrangement of swept beams, and a beam sweeping sequence.

3. The method according to claim 2, wherein an obtaining manner of the beam sweeping range comprises one of the following:

   determining, by the first device, the beam sweeping range based on priori information of a spatial range of the sensing object in sensing priori information and a position of the first device; and
   receiving, by the first device, the beam sweeping range sent by a sensing function network element.

4. The method according to claim 3, wherein the priori information of the spatial range comprises one of the following:

   coordinates of a boundary or a vertex of the spatial range; and
   center coordinates and a distribution range of a relative center of the spatial range.

5. The method according to claim 4, wherein in a case that the priori information of the spatial range comprises the coordinates of the boundary or the vertex of the spatial range, all spatial positions within the spatial range have a same detection priority.

6. The method according to claim 4, wherein in a case that the priori information of the spatial range comprises the center coordinates and the distribution range of the relative center of the spatial range, a detection priority of a spatial position at the center within the spatial range is higher than a detection priority of a spatial position at an edge within the spatial range.

7. The method according to claim 2, wherein an obtaining manner of the arrangement of swept beams comprises one of the following:

   determining, by the first device, the arrangement of swept beams based on the beam sweeping range, and priority information and a beam width within a sweeping range; and
   receiving, by the first device, the arrangement of swept beams sent by a sensing function network element.

8. The method according to claim 7, wherein the determining the arrangement of swept beams based on the beam sweeping range, and priority information and a beam width within a sweeping range comprises one of the following:

   determining a proportionality coefficient for a beam spacing and a beam width of two adjacent beams as a preset value;
   determining the proportionality coefficient for the beam spacing and the beam width of the two adjacent beams based on the beam sweeping range and the beam width; and
   determining the proportionality coefficient for the beam spacing and the beam width of the two adjacent beams according to a first criterion, wherein
   the first criterion comprises that spatial positions with different detection priorities within a spatial range use different proportionality coefficients.

9. The method according to claim 7, wherein a beam arrangement mode of the arrangement of swept beams comprises at least one of the following:

   an arrangement in rows and columns; and
   an arrangement in circles.

10. The method according to claim 2, wherein the beam sweeping sequence comprises one of the following:

    sweeping in rows and columns;
    sweeping in circles; and
    sweeping in regions.

11. The method according to claim 10, wherein the sweeping in regions satisfies at least one of the following:

    sweeping each region in rows and columns; and
    sweeping each region in circles.

12. The method according to claim 1, wherein the receiving, by a first device based on each received beam determined by a first beam sweeping mode, an echo signal of a first signal sent by a second device comprises:

    receiving, by the first device by using a second received beam indicated by the first beam sweeping mode, a third echo signal of the first signal sent by the second device;
    obtaining, by the first device based on the third echo signal, a detection result of whether the sensing object is detected; and
    receiving, by the first device by using a third received beam indicated by the first beam sweeping mode, a fourth echo signal of the first signal sent by the second device in a case that the detection result indicates that the sensing object is not detected, wherein
    the third received beam is a received beam located after the second received beam in the first beam sweeping mode.

13. The method according to claim 12, wherein the obtaining, based on the third echo signal, a detection result of whether the sensing object is detected comprises one of the following:

comparing, by the first device, obtained echo signal quality with a preset value after performing a first operation, to determine the detection result of whether the sensing object is detected; and

receiving, by the first device after performing a second operation, the detection result of whether the sensing object is detected sent by a sensing function network element, wherein

the first operation comprises one of the following:

sending the third echo signal to the sensing function network element, and receiving a measured quantity and the echo signal quality fed back by the sensing function network element;

performing radar signal processing on the third echo signal to determine the measured quantity, and determining the echo signal quality based on the measured quantity;

performing radar signal processing on the third echo signal to determine the measured quantity, sending the measured quantity to the sensing function network element, and receiving the echo signal quality fed back by the sensing function network element;

obtaining a first part of the measured quantity based on partial calculation of the third echo signal on which the radar signal processing is performed, sending the first part to the sensing function network element, and receiving a second part of the measured quantity and the echo signal quality fed back by the sensing function network element, the first part being a part at a first grade among parts with different grades comprised in the measured quantity, and the second part being a part at a second grade among the parts with different grades comprised in the measured quantity; and

obtaining the first part of the measured quantity based on the partial calculation of the third echo signal on which the radar signal processing is performed, sending the first part to the sensing function network element, receiving the second part of the measured quantity fed back by the sensing function network element, and determining the echo signal quality based on the first part and the second part; and

the second operation comprises one of the following:

performing the radar signal processing on the third echo signal to determine the measured quantity, and sending the measured quantity to the sensing function network element;

sending the third echo signal to the sensing function network element;

obtaining the first part of the measured quantity based on the partial calculation of the third echo signal on which the radar signal processing is performed, and sending the first part to the sensing function network element; and

performing the radar signal processing on the third echo signal to determine the measured quantity, determining the echo signal quality based on the measured quantity, and sending the measured quantity and the echo signal quality to the sensing function network element.

14. The method according to claim 13, wherein the echo signal quality comprises at least one of the following:

a power of an echo signal, a signal-to-noise ratio SNR of the echo signal, a signal-to-interference-plus-noise ratio SINR of the echo signal, a reference signal received power RSRP of the echo signal, or reference signal received quality RSRQ of the echo signal.

15. The method according to claim 13, wherein after the obtaining, based on the third echo signal, a detection result of whether the sensing obj ect is detected, the method further comprises:

extracting, by the first device, a target parameter of the sensing object relative to each of the first device and the second device based on the measured quantity and the echo signal quality; or

receiving, by the first device, the target parameter of the sensing object relative to each of the first device and the second device, wherein

the target parameter comprises at least one of the following:

angle, distance, and speed.

16. The method according to claim 12, wherein after the obtaining, based on the third echo signal, a detection result of whether the sensing obj ect is detected, the method further comprises one of the following:

stopping receiving the fourth echo signal of the first signal sent by the second device by using the third received beam indicated by the first beam sweeping mode in a case that the detection result indicates that the sensing object is detected;

recording, in a case that the detection result indicates that the sensing object is detected, a target parameter of the sensing object detected by the second received beam relative to each of the first device and the second device, and receiving, by the first device by using the third received beam indicated by the first beam sweeping mode, the fourth echo signal of the first signal sent by the second device, wherein

the target parameter comprises at least one of the following:

angle, distance, and speed.

17. The method according to claim 16, further comprising:
receiving a fifth echo signal of the first signal at a recorded angle of the sensing object relative to the first device based on a preset time interval, and updating the recorded target parameter of the sensing object relative to each of the first device and the second device based on the fifth echo signal.

18. The method according to claim 17, wherein the preset time interval is determined by at least one of the following:

searching a lookup table based on a radar cross section RCS and motion characteristics of the sensing object, the motion characteristics comprising at least one of a motion speed or a motion acceleration; and
calculating a preset time interval at a second distance based on a first distance and a reference time interval between the first device and the sensing object.

19. The method according to claim 16 or 17, further comprising:
sending the target parameter of the sensing object relative to each of the first device and the second device to the second device or the sensing function network element.

20. The method according to any one of claims 1 to 15, wherein the obtaining a first received beam used at a second moment based on the first echo signal comprises one of the following:

determining the first received beam used at the second moment based on the first echo signal and an angle of the sensing object relative to the first device at the first moment;
determining the first received beam used at the second moment based on a predicted value of an angle of the sensing object relative to the first device obtained at the second moment based on the first echo signal; and
receiving the first received beam used at the second moment sent by the sensing function network element.

21. A sensing method, comprising:

sending, by a second device, a first signal to a first device based on each transmitted beam determined by a second beam sweeping mode;
obtaining, by the second device, a first transmitted beam used at a second moment based on a first echo signal of the first signal received by the first device at a first moment, in a case that it is determined that the first device has detected a sensing object at the first moment; and
sending, by the second device, the first signal to the first device at the second moment based on the first transmitted beam, wherein
the second moment is a moment after the first moment.

22. The method according to claim 21, wherein the second beam sweeping mode comprises at least one of a beam sweeping range, an arrangement of swept beams, and a beam sweeping sequence.

23. The method according to claim 21, wherein the sending a first signal to a first device based on each transmitted beam determined by a second beam sweeping mode comprises:

obtaining, by the second device, a detection result of whether the first device detects the sensing object, after sending the first signal to the second device based on a second transmitted beam indicated by the second beam sweeping mode; and
sending, by the second device, the first signal to the first device based on a third transmitted beam indicated by the second beam sweeping mode in a case that the detection result indicates that the first device has not detected the sensing object, wherein
the third transmitted beam is a transmitted beam located after the second transmitted beam in the second beam sweeping mode.

**24.** The method according to claim 23, wherein the obtaining a detection result of whether the first device detects the sensing object comprises:

receiving, by the second device, the detection result of whether the first device detects the sensing object sent by a sensing function network element, and a target parameter of the detected sensing object relative to each of the first device and the second device; or

receiving, by the second device, the detection result of whether the first device detects the sensing object sent by the first device, and the target parameter of the detected sensing object relative to each of the first device and the second device.

**25.** The method according to claim 23, wherein after the obtaining a detection result of whether the first device detects the sensing object, the method further comprises one of the following:

stopping sending, by the second device, the first signal to the first device by using the third transmitted beam indicated by the second beam sweeping mode in a case that the detection result indicates that the first device has detected the sensing object; and

sending, by the second device, the first signal to the first device based on the third transmitted beam indicated by the second beam sweeping mode in a case that the detection result indicates that the first device has detected the sensing object.

**26.** The method according to claim 23, wherein the obtaining a first transmitted beam used at a second moment based on a first echo signal of the first signal received by the first device at the first moment comprises:

determining, by the second device based on an angle of the sensing object relative to the second device at the first moment, the first transmitted beam used at the second moment; or

determining, by the second device based on a predicted value of an angle of the sensing object relative to the second device at the second moment, the first transmitted beam used at the second moment; or

receiving the first transmitted beam used at the second moment sent by a sensing function network element.

**27.** A sensing method, comprising:

sending, by a sensing function network element, first information to a first device; and/or

sending, by the sensing function network element, second information to a second device, wherein the first information comprises at least one of the following:

a first beam sweeping mode; and

a first received beam used by the first device at a second moment; and the second information comprises at least one of the following:

a second beam sweeping mode; and

a first transmitted beam used by the second device at the second moment.

**28.** The method according to claim 27, further comprising:

obtaining, by the sensing function network element, a measured quantity and echo signal quality of an echo signal of a third signal received by the first device; and

obtaining, by the sensing function network element based on the measured quantity and the echo signal quality, a detection result of whether the first device detects a sensing object, and a target parameter of the detected sensing object relative to each of the first device and the second device, wherein

the target parameter comprises at least one of the following:

angle, distance, and speed.

**29.** The method according to claim 28, wherein the obtaining a measured quantity and echo signal quality of a third echo signal of a first signal received by the first device comprises one of the following:

receiving, by the sensing function network element, the measured quantity and the echo signal quality sent by the first device;

receiving, by the sensing function network element, the measured quantity sent by the first device, and determining the echo signal quality of the third echo signal based on the measured quantity;

receiving, by the sensing function network element, the third echo signal sent by the first device, performing radar signal processing on the third echo signal to determine the measured quantity, and determining the echo signal quality of the third echo signal based on the measured quantity; and

receiving, by the sensing function network element, a first part of the measured quantity corresponding to the third echo signal of the first signal sent by the first device, obtaining a second part of the measured quantity based on the first part, and determining the echo signal quality of the third echo signal based on the first part and the second part, wherein

the first part is a part at a first grade among parts with different grades comprised in the measured quantity, and the second part is a part at a second grade among the parts with different grades comprised in the measured quantity.

30. The method according to claim 28, wherein the obtaining a detection result of whether the first device detects the sensing object comprises:

comparing the echo signal quality with a preset value; and

determining that the detection result is that the sensing object is detected in a case that the echo signal quality is greater than the preset value, or otherwise determining that the detection result is that the sensing object is not detected.

31. The method according to claim 28, wherein in a case that it is determined that the detection result is that the sensing object is detected, the method further comprises:
extracting the target parameter of the sensing object relative to each of the first device and the second device.

32. The method according to claim 28, wherein after the obtaining a detection result of whether the first device detects the sensing object, the method further comprises:
sending the detection result to the first device and/or the second device.

33. The method according to claim 28, wherein an obtaining manner of the first received beam used by the first device at the second moment comprises one of the following:

determining, by the sensing function network element based on an obtained angle of the sensing object relative to the first device at the first moment, the first received beam used at the second moment; and

determining, by the sensing function network element based on an obtained predicted value of the angle of the sensing object relative to the first device at the second moment, the first received beam used at the second moment.

34. The method according to claim 28, wherein an obtaining manner of the first transmitted beam used by the second device at the second moment comprises:

determining, by the sensing function network element based on an obtained predicted value of an angle of the sensing object relative to the second device at the second moment, the first transmitted beam used at the second moment; and

determining, by the sensing function network element based on an obtained angle of the sensing object relative to the second device at the first moment, the first transmitted beam used at the second moment.

35. The method according to claim 27, further comprising one of the following:

receiving a third echo signal sent by the first device, obtaining a measured quantity and echo signal quality based on the third echo signal, and sending the measured quantity and the echo signal quality to the first device;

receiving the measured quantity sent by the first device, obtaining the echo signal quality based on the measured quantity, and sending the echo signal quality to the first device;

receiving a first part of the measured quantity sent by the first device, obtaining a second part of the measured quantity based on the first part, determining the echo signal quality based on the first part and the second part, and sending the second part and the echo signal quality to the first device; and

receiving the first part of the measured quantity sent by the first device, determining the second part of the measured quantity based on the first part, and sending the second part to the first device, wherein

the first part is a part at a first grade among parts with different grades comprised in the measured quantity, and the second part is a part at a second grade among the parts with different grades comprised in the measured quantity.

36. A sensing apparatus, applied to a first device, and comprising:

a first receiving module, configured to receive, based on each received beam determined by a first beam sweeping mode, an echo signal of a first signal sent by a second device;
a first obtaining module, configured to obtain, in a case that it is determined based on a first echo signal received at a first moment that a sensing object is detected, a first received beam used at a second moment based on the first echo signal; and
a second receiving module, configured to receive, at the second moment based on the first received beam, a second echo signal of a first signal sent by the first device, wherein
the second moment is a moment after the first moment.

37. A sensing apparatus, applied to a second device, and comprising:

a first sending module, configured to send a first signal to a first device based on each transmitted beam determined by a second beam sweeping mode;
a second obtaining module, configured to obtain a first transmitted beam used at a second moment based on a first echo signal of the first signal received by the first device at the first moment, in a case that it is determined that the first device has detected a sensing object at a first moment; and
a second sending module, configured to send the first signal to the first device at the second moment based on the first transmitted beam, wherein
the second moment is a moment after the first moment.

38. A sensing apparatus, applied to a sensing function network element, and comprising:

a third sending module, configured to: send first information to a first device; and/or
send second information to a second device, wherein
the first information comprises at least one of the following:

a first beam sweeping mode; and
a first received beam used by the first device at a second moment; and
the second information comprises at least one of the following:

a second beam sweeping mode; and
a first transmitted beam used by the second device at the second moment.

39. A communication device, comprising a processor and a memory, wherein the memory stores a program or an instruction executable in the processor, the program or the instruction, when executed by the processor, implementing the steps of the sensing method according to any one of claims 1 to 35.

40. A readable storage medium, storing a program or an instruction, wherein the program or the instruction, when executed by a processor, implements the steps of the sensing method according to any one of claims 1 to 35.

## FIG. 1

Start

A first device receives, based on each received beam determined by a first beam sweeping mode, an echo signal of a first signal sent by a second device ⟿ 201

The first device obtains a first received beam used at a second moment based on the first echo signal, in a case that it is determined based on a first echo signal received at a first moment that a sensing object has been detected ⟿ 202

The first device receives, at the second moment based on the first received beam, a second echo signal of a first signal sent by the first device ⟿ 203

End

## FIG. 2

Beam width
of 3 dB

$\theta_{3dB}$

$k\,\theta_{3dB}$

Beam spacing

# FIG. 3

Angle sweeping range

Azimuth
direction

Pitch
direction

# FIG. 4

First circle

Second circle

Azimuth
direction

Pitch
direction

# FIG. 5

FIG. 6

FIG. 7

Region 2    Region 1    Region 3

FIG. 8

FIG. 9

FIG. 10

FIG. 11

FIG. 12

FIG. 13

Sensing function
network element

Base station/
terminal

Terminal/base
station

FIG. 14

1500

Sensing apparatus

First receiving module — 1501

First obtaining module — 1502

Second receiving
module — 1503

FIG. 15

FIG. 16

FIG. 17

A second device sends a first signal to a first device based on each transmitted beam determined by a second beam sweeping mode — 1801

The second device obtains a first transmitted beam used at a second moment based on a first echo signal of the first signal received by the first device at a first moment in a case that it is determined that the first device has detected a sensing object at the first moment — 1802

The second device sends the first signal to the first device at the second moment based on the first transmitted beam — 1803

FIG. 18

```
┌─────────────────────────────────┐
│         Sensing apparatus        │ ⌇ 1900
│  ┌───────────────────────────┐   │
│  │    First sending module   │   │ ⌇ 1901
│  └───────────────────────────┘   │
│                │                 │
│  ┌───────────────────────────┐   │
│  │     Second obtaining       │   │ ⌇ 1902
│  │         module            │   │
│  └───────────────────────────┘   │
│                │                 │
│  ┌───────────────────────────┐   │
│  │     Second sending         │   │ ⌇ 1903
│  │         module            │   │
│  └───────────────────────────┘   │
└─────────────────────────────────┘
```

## FIG. 19

```
        ⟨   Start   ⟩
             │
             ▼
┌─────────────────────────────────────────────────┐
│ A sensing function network element sends first   │  2001
│ information to a first device, and/or the sensing│
│ function network element sends second            │
│ information to a second device                   │
└─────────────────────────────────────────────────┘
             │
             ▼
        (   End   )
```

## FIG. 20

```
┌─────────────────────────────────┐
│         Sensing apparatus        │ ⌇ 2100
│  ┌───────────────────────────┐   │
│  │    Third sending module   │   │ ⌇ 2101
│  └───────────────────────────┘   │
└─────────────────────────────────┘
```

## FIG. 21

```
                                    ⌐ 2200
┌───────────────────────────────────────────────────────┐
│          Sensing function network element              │
│ 2201 ┌──────────┐        ┌──────────┐                  │
│      │Processor │◄──────►│          │                  │
│      └──────────┘        │          │   ┌──────────┐   │
│                          │   Bus    │◄─►│ Network  │─ 2202
│                          │interface │   │interface │   │
│ 2203 ┌──────────┐        │          │   └──────────┘   │
│      │ Memory   │◄──────►│          │                  │
│      └──────────┘        └──────────┘                  │
└───────────────────────────────────────────────────────┘
```

## FIG. 22

2300

Communication device

| 2301 | Processor | ⟺ | Memory | 2302 |

FIG. 23

<div align="center">**INTERNATIONAL SEARCH REPORT**</div>

| International application No. |
|---|
| **PCT/CN2022/140291** |

**A.    CLASSIFICATION OF SUBJECT MATTER**

H04W24/02(2009.01)i

According to International Patent Classification (IPC) or to both national classification and IPC

**B.    FIELDS SEARCHED**

Minimum documentation searched (classification system followed by classification symbols)

IPC: H04W, H04B

Documentation searched other than minimum documentation to the extent that such documents are included in the fields searched

Electronic data base consulted during the international search (name of data base and, where practicable, search terms used)

3GPP, CJFD, CNTXT, ENTXTC: 波束, 波束指向, 调节, 感测, 感知, 感知一体化, 回波, 获取, 接收波束, 切换, 确定, 选择, 重选, 自适应调节, adaptive, beam, direction, echo, isac, RB, receiving, vivo, achiev+, select+, percept+, regulat+, handover+, switch+, adjust+, accept+, determin+, recept+, percep+, obtain+, receipt+

**C.    DOCUMENTS CONSIDERED TO BE RELEVANT**

| Category* | Citation of document, with indication, where appropriate, of the relevant passages | Relevant to claim No. |
|---|---|---|
| X | WO 2021083368 A1 (HUAWEI TECHNOLOGIES CO., LTD.) 06 May 2021 (2021-05-06) description, page 9 line 14-page 20 line 25, page 20 line 37-page 21 line 36, and description, figures 5 and 12 | 1-11, 20-22, 27, 36-40 |
| A | CN 112887903 A (SOUTHEAST UNIVERSITY) 01 June 2021 (2021-06-01) entire description | 1-40 |
| A | US 2018088225 A1 (INTEL CORP.) 29 March 2018 (2018-03-29) entire description | 1-40 |
| A | WO 2021023232 A1 (VIVO COMMUNICATION TECHNOLOGY CO., LTD.) 11 February 2021 (2021-02-11) entire description | 1-40 |
| A | 杨明远; 徐笛; 江利中; 丁红晖; 顾泽凌; 张衡 (YANG, Mingyuan; XU, Di; DING, Honghui; GU, Zeling; ZHANG, Heng). "基于最小全变差的雷达测距方法 (Ranging Method Based on Total Variation Minimization)" 现代防御技术 (Modern Defence Technology), No. 04, 15 August 2020 (2020-08-15), entire document | 1-40 |

☐ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 February 2023** | **22 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/140291**

| Patent document cited in search report | | | Publication date (day/month/year) | Patent family member(s) | | | Publication date (day/month/year) |
|---|---|---|---|---|---|---|---|
| WO | 2021083368 | A1 | 06 May 2021 | EP | 4043917 | A1 | 17 August 2022 |
| | | | | EP | 4043917 | A4 | 09 November 2022 |
| CN | 112887903 | A | 01 June 2021 | None | | | |
| US | 2018088225 | A1 | 29 March 2018 | US | 2020018842 | A1 | 16 January 2020 |
| | | | | US | 10802128 | B2 | 13 October 2020 |
| | | | | US | 10408930 | B2 | 10 September 2019 |
| | | | | WO | 2018063549 | A1 | 05 April 2018 |
| | | | | US | 2020018842 | A1 | 16 January 2020 |
| | | | | US | 10802128 | B2 | 13 October 2020 |
| | | | | US | 10408930 | B2 | 10 September 2019 |
| | | | | WO | 2018063549 | A1 | 05 April 2018 |
| WO | 2021023232 | A1 | 11 February 2021 | None | | | |

Form PCT/ISA/210 (patent family annex) (July 2022)

**REFERENCES CITED IN THE DESCRIPTION**

**Patent documents cited in the description**

- CN 202111583336